# EUROPEAN PATENT APPLICATION

(11) **EP 3 540 667 A1**
(43) Date of publication of application: **18.09.2019**
(21) Application number: 19172337.8
(22) Date of filing: 14.12.2016
(51) Int. Cl.: G06Q 10/08, G06Q 30/06

(54) **REFRIGERATOR**

(30) Priority: 26.12.2015 KR 20150187003
(62) Divisional of application: 16204172.7
(71) Applicant: Samsung Electronics Co., Ltd., Gyeonggi-do 16677 (KR)
(72) Inventor: KIM, Mi Young, Seoul (KR); LEE, Soo Young, Gyeonggi-do (KR)
(74) Representative: Walaski, Jan Filip

(57) **Abstract**

A refrigerator includes a communicator, a touchscreen display, and a controller. The controller displays information corresponding to user touch input received through the touchscreen display on the touchscreen display. A home screen of the touchscreen display includes a product purchase icon through which a user inputs a purchase command for a predetermined product. If the user touches the product purchase icon, the controller transmits an order request of the predetermined product to a shopping mall server through the communicator.

## Description

The present disclosure relates to a refrigerator, and more particularly to a refrigerator configured to communicate with an external device.

Recently, a refrigerator includes a display configured to display a temperature of a storage chamber and the refrigerator's operation modes.

The display can allow a user to easily acquire image information using a Graphical User Interface (GUI) in a manner that the user can intuitively input a control command using a touch panel. In other words, the latest display has been configured to perform an information display function and an information input function.

In addition, the latest refrigerator includes a communication module to connect to an external device (e.g., a server connected to the Internet).

The refrigerator may connect to the Internet through the communication module, may acquire various kinds of information from various servers connected to the Internet, and may provide a variety of services on the basis of the acquired information. For example, the refrigerator may provide the user with food related information (e.g., food information and recipes) over the Internet, and may provide the user with a variety of services such as Internet shopping or the like.

As described above, the refrigerator can provide the user with a wider variety of services through the display and the communication module.

Therefore, it is an aspect of the present disclosure to provide a refrigerator for providing the user with a convenient Internet shopping service using a touchscreen display and a communication module.

It is another aspect of the present disclosure to provide a refrigerator for controlling other electronic appliances using the touchscreen display and the communicator.

It is another aspect of the present disclosure to provide a refrigerator for simultaneously displaying schedules of multiple users using the touchscreen display and the communicator.

It is another aspect of the present disclosure to provide a refrigerator for audibly outputting content information.

Additional aspects of the present disclosure will be set forth in part in the description which follows and, in part, will be obvious from the description, or may be learned by practice of the present disclosure.

In accordance with an aspect of the present disclosure, a refrigerator includes a communicator, a touchscreen display, and a controller. The controller displays information corresponding to user touch input received through the touchscreen display on the touchscreen display. A home screen of the touchscreen display includes a product purchase icon through which a user inputs a purchase command for a predetermined product. If the user touches the product purchase icon, the controller transmits an order request of the predetermined product to a shopping mall server through the communicator.

The controller may display a plurality of products on a shopping screen of the touchscreen display.

If at least one of the products is selected as an immediate purchase product, the controller may display a product purchase icon for immediate purchase of the at least one selected product.

The controller may receive destination information and payment information for immediately purchasing the at least one selected product from the user, and may store user-input destination information and user-input payment information in a storage of the refrigerator.

The order request may include product information of the predetermined product, destination information of the user, and payment information of the user stored in the storage.

After occurrence of the order request, the controller may display product information related to the requested product on the home screen of the touchscreen display.

After occurrence of the order request, the controller may receive delivery information of the product from the shopping mall server, and may display the received delivery information on the home screen of the touchscreen display.

In accordance with an aspect of the present disclosure, a refrigerator includes: one or more consumables; a communicator; a touchscreen display; and a controller configured to display information corresponding to user touch input received through the touchscreen display on the touchscreen display. The controller may calculate lifespans of the consumables. If the lifespan of the consumables have ended, the controller may transmit an order request for the consumables to a shopping mall server through the communicator.

The controller may display a plurality of products on a shopping screen of the touchscreen display.

If at least one of the products is selected as an automatic purchase product, the controller may receive information of the consumables corresponding to the at least one selected product.

The controller may receive destination information and payment information for automatically purchasing the at least one selected product, and may store user-input destination information and user-input payment information in a storage of the refrigerator.

The order request may include product information of the predetermined product, destination information of the user, and payment information of the user stored in the storage.

After occurrence of the order request, the controller may display product information related to the requested product on the home screen of the touchscreen display.

After occurrence of the order request, the controller may receive delivery information of the product from the shopping mall server, and may display the received delivery information on the home screen of the touchscreen display.

In accordance with an aspect of the present disclosure, a refrigerator includes: an audio part configured to output a sound signal; a touchscreen display; and a controller configured to display information corresponding to user touch input received through the touchscreen display on the touchscreen display. The controller may audibly output content information decided by a user through the audio part.

The touchscreen display may display a setup screen needed to audibly output the content.

The setup screen may include: a first region configured to establish activation or deactivation of a function for audibly outputting the content; a second region configured to establish a trigger condition needed to audibly output the content; a third region configured to establish at least one of tone and volume of content output sound; and a fourth region configured to establish the output content.

The trigger condition may include: a first trigger condition configured to audibly output the content when the user approaches the refrigerator; a second trigger condition configured to audibly output the content when the user opens one or more doors of the refrigerator; and a third trigger condition configured to audibly output the content at intervals of a predetermined time.

The second region may include: a tone selection region configured to select tone of content output sound; and a volume selection region configured to select volume of the content output sound.

The content may include at least one of weather information, news information, and schedule information.

These and/or other aspects of the invention will become apparent and more readily appreciated from the following description of the embodiments, taken in conjunction with the accompanying drawings in which:
FIG. 1 is a perspective view illustrating an external appearance of a refrigerator according to an embodiment of the present disclosure.
FIG. 2 is a front view illustrating the refrigerator according to an embodiment of the present disclosure.
FIG. 3 is a block diagram illustrating the refrigerator according to an embodiment of the present disclosure.
FIG. 4 is a view illustrating a touchscreen display contained in the refrigerator according to an embodiment of the present disclosure.
FIG. 5 is a view illustrating a home screen displayed on the touchscreen display contained in the refrigerator according to an embodiment of the present disclosure.
FIG. 6 is a conceptual diagram illustrating a method for communicating with the external part through a communicator contained in the refrigerator according to an embodiment of the present disclosure.
FIG. 7 is a flowchart illustrating a method for allowing the refrigerator to control electronic appliances according to an embodiment of the present disclosure.
FIGS. 8 and 9 are exemplary views illustrating a login screen displayed on the refrigerator according to an embodiment of the present disclosure.
FIGS. 10, 11, 12 and 13 are exemplary views illustrating control screens displayed on the refrigerator according to an embodiment of the present disclosure.
FIG. 14 is a flowchart illustrating a method for allowing the refrigerator to audibly output content according to an embodiment of the present disclosure.
FIGS. 15 and 16 are exemplary views illustrating setup screen images displayed on the refrigerator according to an embodiment of the present disclosure.
FIG. 17 is an exemplary view illustrating the home screen through which the refrigerator can audibly output the content according to an embodiment of the present disclosure.
FIG. 18 is a flowchart illustrating a method for allowing the user to purchase products through the refrigerator according to an embodiment of the present disclosure.
FIG. 19 is an exemplary view illustrating the shopping screen displayed on the refrigerator according to an embodiment of the present disclosure.
FIG. 20 is an exemplary view illustrating the shopping screen for providing an immediate purchase icon through the refrigerator according to an embodiment of the present disclosure.
FIG. 21 is an exemplary view illustrating the immediate purchase icon displayed on the home screen of the refrigerator according to an embodiment of the present disclosure.
FIG. 22 is a flowchart illustrating an immediate purchase method of the refrigerator according to an embodiment of the present disclosure.
FIG. 23 is a flowchart illustrating an automatic purchase method of the refrigerator according to an embodiment of the present disclosure.
FIG. 24 is an exemplary view illustrating a schedule management screen displayed on the refrigerator according to an embodiment of the present disclosure.
FIG. 25 is a flowchart illustrating a schedule management method of the refrigerator according to an embodiment of the present disclosure.
FIG. 26 is a conceptual diagram illustrating a method for updating the schedule management screen displayed on the refrigerator according to an embodiment of the present disclosure.
FIG. 27 is a flowchart illustrating a card management method of the refrigerator according to an embodiment of the present disclosure.
FIG. 28 is a conceptual diagram illustrating a method for changing a card through a mobile terminal.
FIG. 29 is a conceptual diagram illustrating a method for updating the schedule management screen displayed on the refrigerator according to an embodiment of the present disclosure.

The following detailed description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. The progression of processing operations described is an example; however, the sequence of and/or operations is not limited to that set forth herein and may be changed as is known in the art, with the exception of operations necessarily occurring in a particular order. In addition, respective descriptions of well-known functions and constructions may be omitted for increased clarity and conciseness.

Additionally, exemplary embodiments will now be described more fully hereinafter with reference to the accompanying drawings. The exemplary embodiments may, however, be embodied in many different forms and should not be construed as being limited to the embodiments set forth herein. These embodiments are provided so that this disclosure will be thorough and complete and will fully convey the exemplary embodiments to those of ordinary skill in the art. Like numerals denote like elements throughout.

It will be understood that, although the terms first, second, etc. may be used herein to describe various elements, these elements should not be limited by these terms. These terms are only used to distinguish one element from another. As used herein, the term "and/or," includes any and all combinations of one or more of the associated listed items.

It will be understood that when an element is referred to as being "connected," or "coupled," to another element, it can be directly connected or coupled to the other element or intervening elements may be present. In contrast, when an element is referred to as being "directly connected," or "directly coupled," to another element, there are no intervening elements present.

The terminology used herein is for the purpose of describing particular embodiments only and is not intended to be limiting. As used herein, the singular forms "a," "an," and "the," are intended to include the plural forms as well, unless the context clearly indicates otherwise.

Reference will now be made in detail to the exemplary embodiments of the present disclosure, examples of which are illustrated in the accompanying drawings, wherein like reference numerals refer to like elements throughout.

Reference will now be made in detail to the embodiments of the present disclosure, examples of which are illustrated in the accompanying drawings, wherein like reference numerals refer to like elements throughout.

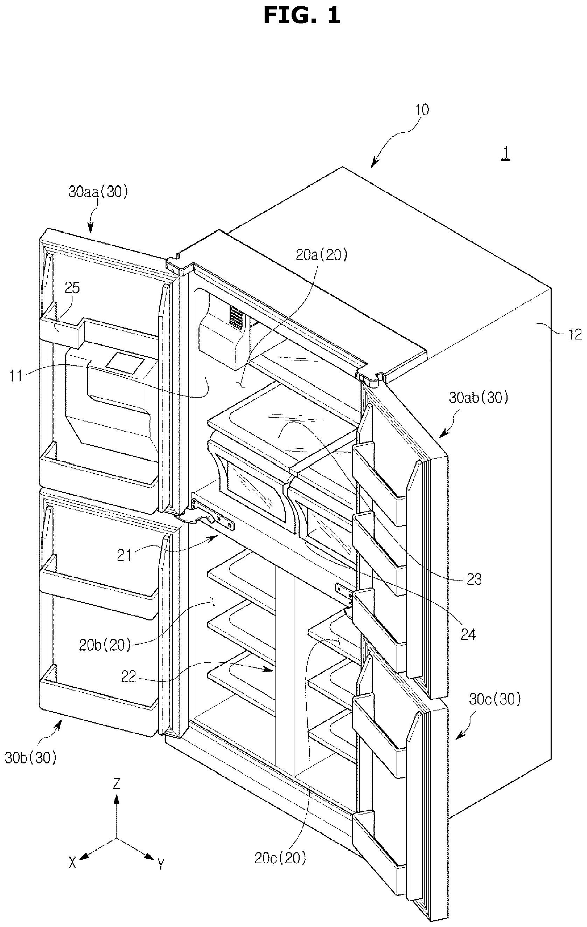

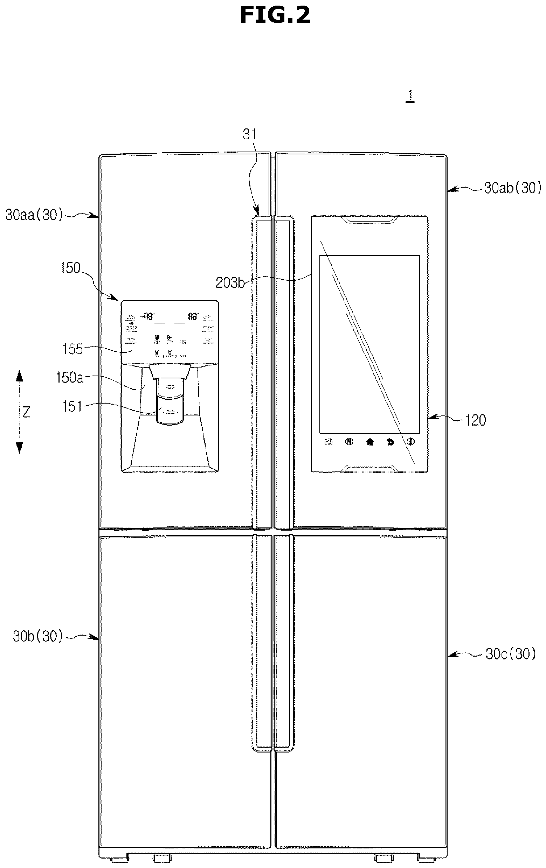

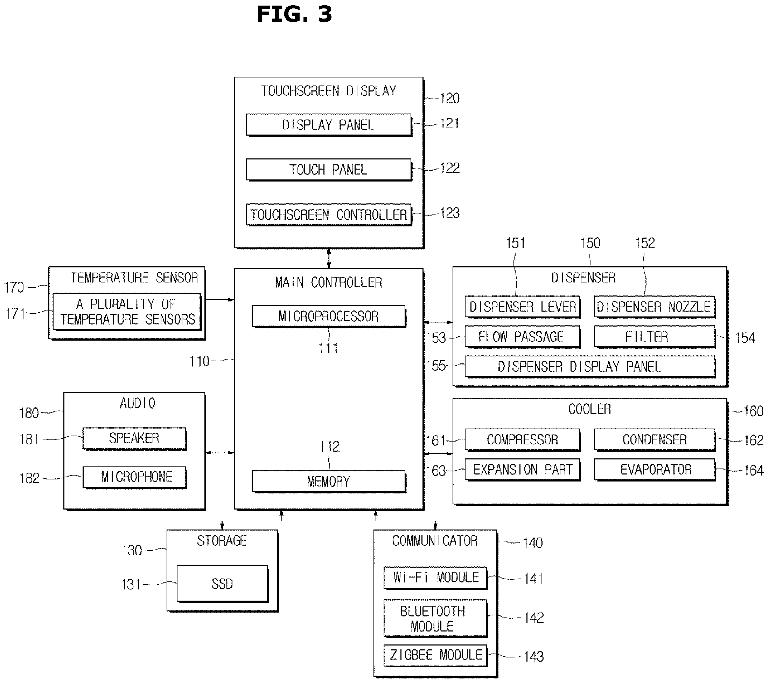

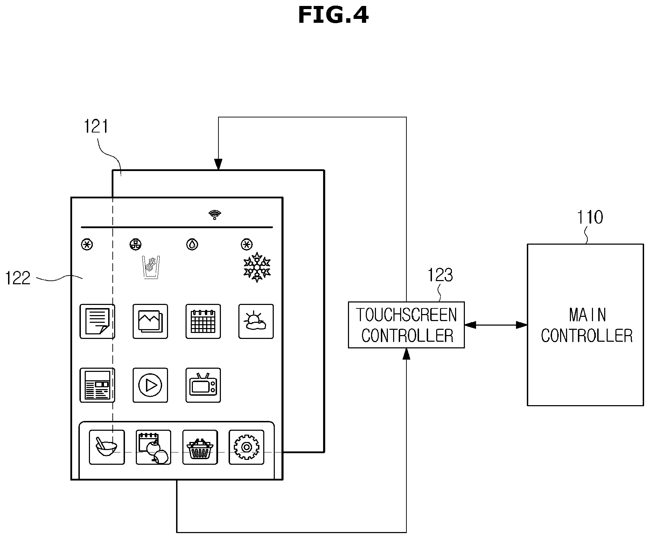

FIG. 1 is a perspective view illustrating an external appearance of a refrigerator according to an embodiment of the present disclosure. FIG. 2 is a front view illustrating the refrigerator according to an embodiment of the present disclosure. FIG. 3 is a block diagram illustrating the refrigerator according to an embodiment of the present disclosure. FIG. 4 is a view illustrating a touchscreen display contained in the refrigerator according to an embodiment of the present disclosure.

Referring to FIGS. 1, 2, 3 and 4, the refrigerator 1 may include a main body 10 having an open front surface; and doors 30 to open or close the opened front surface of the main body. In addition, the main body 10 may include one or more storage chambers 20 to store food at a refrigerating or freezing temperature.

The main body 10 may form the external appearance of the refrigerator 1. The main body 10 may include an inner casing 11 to form the storage chamber 20; an outer casing 12 coupled to the exterior of the inner casing 11 so as to form the exterior appearance of the refrigerator 1; and insulation disposed between the inner casing 11 and the outer casing 12 so as to prevent cool air of the storage chamber 20 from leaking outside.

The storage chamber 20 may be classified into a plurality of storage chambers by a horizontal partition 21 and a vertical partition 22. For example, the storage chamber 20 may be classified into an upper storage chamber 20a, a first lower storage chamber 20b, and a second lower storage chamber 20c as shown in FIG. 1.

In addition, the lower storage chambers (30, 40) may be classified into a left storage chamber 30 and a right storage chamber 40 on the basis of the front surface of the refrigerator 1. The storage chamber 20 may be provided with a shelf 23 allowing food to be placed thereon, and an airtight container 24 to store food in a sealed state.

The storage chamber(s) 20 may be opened or closed by the doors 30. For example, as shown in FIG. 1, the upper storage chamber 20a may be opened or closed by the first upper door 30aa and the second lower door 30ab. The first lower storage chamber 20b may be opened or closed by the first lower door 30b, and the second lower storage chamber 20c may be opened or closed by the second lower door 30c.

The door 30 may be provided with one or more knobs 31 through which the user can easily open or close the door 30. The knob 31 may be vertically elongated along the spacing between the first upper door 30aa and the second upper door 30ab and the spacing between the first lower door 30b and the second lower door 30c. As a result, when the door 30 is closed, the knob 31 appears to be incorporated with the door 30.

In addition, the refrigerator 1 may include a touchscreen display 120, a storage 130, a communicator 140, a dispenser 150, a cooler 160, a temperature sensor 170, an audio part eg. speaker 180, and a main controller 110.

The touchscreen display 120 may interact with the user. For example, the touchscreen display 120 may receive a user input signal from the user, and may display images corresponding to the received user input.

The touchscreen display 120 may include a display panel 121 to display images thereon; a touch panel 122 to receive a user input signal; and a touchscreen controller 123 to control/drive the display panel 121 and the touch panel 122.

The display panel 121 may convert image data received from the main controller 110 into optical images to be viewed by the user's eyes through the touchscreen controller 123.

The display panel 121 may be implemented by any of a Cathode Ray Tube (CRT) panel, a Liquid Crystal Display (LCD) panel, a Light Emitting Diode (LED) panel, an Organic Light Emitting Diode (OLED), a Plasma Display Panel (PDP) panel, etc. without being limited thereto. The display panel 101 may include a variety of display parts capable of visually displaying optical images corresponding to image data.

The touch panel 122 may receive user touch input, and may transmit an electrical signal corresponding to the received user touch input to the touchscreen controller 123.

Specifically, the touch panel 122 may detect a touch input signal of the user who touches the touch panel 122, and may transmit the electrical signal corresponding to coordinates of the user touch point to the touchscreen controller 123. The touchscreen controller 123 may acquire coordinates of the user touch point on the basis of the electrical signal received from the touch panel 122.

The touch panel 122 may be located at the front surface of the display panel 121. In other words, the touch panel 122 may be located over the image display surface. Therefore, the touch panel 122 may be formed of a transparent material to prevent distortion of images displayed on the display panel 121. The touch panel 122 may be implemented by a resistive touchscreen panel or a capacitive touchscreen panel, without being limited thereto. The touch panel 122 may include various input parts, which detect user's touch or approach and output the electrical signal corresponding to coordinates of the user's touch point or the electrical signal corresponding to the approach point.

The touchscreen controller 123 may drive and control the operations of the display panel 121 and the touch panel 122. Specifically, the touchscreen controller 122 may drive the display panel 121 such that the optical image corresponding to image data received from the main controller 110, and may control the touch panel 122 to detect coordinates of the user's touch point.

The touchscreen controller 123 may determine coordinates of the user touch point on the basis of the electrical signal generated from the touch panel 122, and may transmit the coordinates of the user touch point to the main controller 110.

In addition, the touchscreen controller 123 may transmit the electrical signal generated from the touch panel 122 to the main controller 110 in such a manner that the main controller 110 can determine the coordinates of the user touch point.

The touchscreen controller 123 may include a memory (not shown) for storing programs and data needed to control the display panel 121 and the touch panel 122; and a microprocessor (not shown) for performing calculation (or operation) needed to control the display panel 121 and the touch panel 122 according to the programs and data stored in the memory. In addition, the memory and processor of the touchscreen controller 123 may be implemented as different chips or a single chip.

The touchscreen display 120 may be mounted to the door 30 for convenience of description. For example, the touchscreen display 120 may be mounted to the second upper door 30ab as shown in FIG. 2. Although the following description will disclose the touchscreen display 120 mounted to the second upper door 30ab for convenience of description, the installation position of the touchscreen display 120 is not limited to the second upper door 30ab. The dispenser 40 may be installed anywhere that the user can view the dispenser 40. For example, the dispenser 40 may be installed at the first upper door 30aa, the first lower door 30b, the second lower door 30c, and the outer casing 12 of the main body 10.

In addition, the touchscreen display 120 may include a wake-up function that is automatically activated when the user approaches the touchscreen display 120 within a predetermined range or less. For example, when the user approaches the touchscreen display 120 approaches the touchscreen display 120 within the predetermined range or less, the touchscreen display 120 may be activated. In other words, the touchscreen display 200 may be switched on. In contrast, when the user deviates from the predetermined range, the touchscreen display 120 may be deactivated. In other words, the touchscreen display 120 may be switched off.

The touchscreen display 120 may display various screens or images. The screens or images displayed on the touchscreen display 120 will hereinafter be described in detail.

The storage 130 may store not only a control program and control data for controlling the operation of the refrigerator 1 but also various application programs and application data for performing various functions according to a user input signal. For example, the storage 130 may store an operating system (OS) program for managing constituent elements contained in the refrigerator 1 and resources (software and hardware); an image display application for displaying the pre-stored images; a moving image playback application for reproducing the pre-stored moving images; a scheduler application for managing a schedule; a memo application for storing and displaying a memorandum; and an online shopping application for allowing the user to purchase products or commodities online.

The storage 130 may include a non-volatile memory which retains the stored program or data even when powered off. For example, the storage 130 may include a high-capacity flash memory or solid state drive (SSD) 131.

The communicator 140 may transmit data to the external device under the control of the main controller 110, and may receive data from the external device.

The communicator 140 may include communication modules (141, 142, 143) to transmit and receive data according to a predetermined communication protocol. For example, the communicator 140 may include a Wireless Fidelity (Wi-Fi®) module 141 for accessing a Local Area Network (LAN) through an access point (AP) or the like; a Bluetooth (Bluetooth®) module 142 for communicating with the external device according to one-to-one communication or for communicating with a small number of external devices according to one-to-multiple communication; and a ZigBee module 143 for forming a Local Area Network (LAN) between the plurality of electronic appliances (mainly home appliances).

In addition, each communication module (141, 142, or 143) may include an antenna configured to transmit or receive RF signals to or from the air; and a modulator/demodulator for modulating data to be transmitted or for demodulating the received RF signals.

The operations of the refrigerator 1 through the communicator 140 will hereinafter be described.

The dispenser 150 may discharge water or ice cubes according to the user input signal. In other words, the user may directly discharge the water or ice cubes without opening the door(s) 30 through the dispenser 150.

The dispenser 150 may include a dispenser lever 151 to receive a user's discharge command; a dispenser nozzle 152 to discharge water or ice cubes; a flow passage 153 to guide water from the external water supply source to the dispenser nozzle 152; a filter 154 to purify the discharged water; and a dispenser display panel 155 to display the operation state of the dispenser 150.

The dispenser 150 may be installed outside the door 30 or the main body 10. For example, as shown in FIG. 1, the dispenser 150 may be mounted to the first upper door 30aa. Although the dispenser 150 mounted to the first upper door 30a will hereinafter be described, the scope or spirit of the present disclosure is not limited to the dispenser 150 mounted to the first upper door 30a. For example, the dispenser 150 may be installed anywhere that the user can extract the water or ice cubes from the dispenser 150. For example, the dispenser 150 may be installed at the second upper door 30ab, the first lower door 30b, the second lower door 30c, and the outer casing 12 of the main body 10.

For example, the door 30 or the outer casing 12 may include a cavity 150a recessed inward such that the discharge space of the water or ice cubes is formed in the door 30 or the outer casing 12. The dispenser nozzle 152 and the dispenser lever 151 may be provided in the cavity 150a. If the user pushes the dispenser lever 151, water or ice may be discharged from the dispenser nozzle 152.

Specifically, when water is discharged from the dispenser nozzle 152, the water may flow from the external water-supply source (not shown) to the dispenser nozzle 152 along the flow passage 152. In addition, the water may be purified by the filter 154 while flowing to the dispenser nozzle 152.

The filter 154 may be detachably coupled to the main body 10 or the door 30 in a manner that an old filter can be replaced with a new filter.

The cooler 160 may provide the storage chamber 20 with cool air.

Specifically, the cooler 160 may control the temperature of the storage chamber 20 to remain within a predetermined range using refrigerant evaporation

The cooler 160 may include a compressor 161 to compress gas refrigerant; a condenser 162 to convert the compressed gas refrigerant into liquid refrigerant; an expansion part 163 to decompress the liquid refrigerant; and an evaporator 164 to convert the decompressed liquid refrigerant into liquid refrigerant.

Specifically, the cooler 160 may provide the storage chamber 20 with cool air because the decompressed liquid refrigerant absorbs heat from the ambient air when converting into the liquid refrigerant.

However, the scope of the constituent elements of the cooler 160 is not limited to the compressor 161, the condenser 162, the expansion part 163, and the evaporator 164.

For example, the cooler 160 may include a Peltier element using the Peltier effect. According to the Peltier effect, if current flows onto the contact surface of different kinds of metal, exothermic reaction occurs in one metal and endothermic reaction occurs in the other metal. The cooler 160 may provide the storage chamber 102 with cool air using the Peltier element.

In another example, the cooler may include a magnetic cooling device using the magneto-caloric effect. According to the magnetic-caloric effect, if a specific material (magneto-caloric material) is magnetized, exothermic reaction occurs therein, and if a specific material (magneto-caloric material) is demagnetized, endothermic reaction occurs therein. The cooler 160 may also provide the storage chamber 20 with cool air using the magnetic cooling device.

The temperature sensor 170 may be provided in the storage chamber 20, such that it may detect the internal temperature of the storage chamber 20. The temperature sensor 170 may include a plurality of temperature sensors 171 respectively installed in the plurality of storage chambers (20a, 20b, 20c). In addition, each of the temperature sensors 171 may include a thermistor, electric resistance of which is changed according to temperature.

The audio part 180 may include a speaker 181 for converting the electrical signal received from the main controller 110 into a sound signal, and outputting the sound signal; and a microphone 182 for converting the sound signal into an electrical signal, and outputting the electrical signal to the main controller 110.

The main controller 110 may control the touchscreen display 120, the storage 130, the communicator 140, the dispenser 150, the cooler 160, the temperature sensor 170, and the audio part 180 according to the user input received through the touchscreen display 120 and/or the program and data stored in the storage 130.

The main controller 110 may include a microprocessor 111 for performing calculation (or operation) needed to control the refrigerator 1, and a memory 112 for storing the program and data associated with the calculation operation of the microprocessor 111.

The microprocessor 111 may retrieve the data stored in the memory 112 according to the program stored in the memory 112, and may perform the arithmetic or logic operation on the retrieved data. In addition, the microprocessor 111 may output the arithmetic or logic operation result to the memory 112.

The memory 112 may include a volatile memory, stored data of which is lost when power supply is stopped. The volatile memory may retrieve the program and data from the storage 130, and may temporarily store the retrieved data. The volatile memory may provide the microprocessor 111 with the stored program and data, and may store output data of the microprocessor 111. The volatile memory may include SRAM, DRAM, etc.

The memory 112 may include a non-volatile memory as necessary. The non-volatile memory may retain the stored data when power supply is stopped. The non-volatile memory store firmware to initialize various constituent elements contained in the refrigerator 1. The non-volatile memory may include ROM, EPROM, EEPROM, flash memory, etc.

The main controller 110 may include a plurality of microprocessors 110 and a plurality of memories 112. For example, the main controller 110 may include a first microprocessor and a first memory to control the temperature sensor 170, the dispenser 150, and the cooler 160 of the refrigerator 1; and a second microprocessor and second memory to control the touchscreen display 120, the storage 130, the communicator 140, and the audio part 180 of the refrigerator 1; and a second microprocessor and second memory to control the touchscreen display 120, the storage 130, the communicator 140, and the audio part 180 of the refrigerator 1.

Although the microprocessor 111 and the memory 112 have been functionally distinguished from each other for convenience of description, it should be noted that the microprocessor 111 and the memory 112 are not always physically distinguished from each other. For example, the microprocessor 111 and the memory 112 may be implemented as different chips or only one chip.

As described above, the main controller may control overall operations of the refrigerator 1, and the operations of the refrigerator may be carried out under the control of the main controller 110.

Although the main controller 110, the storage 130, and the communicator 140 are functionally distinguished from each other for convenience of description, it should be noted that the main controller 110, the storage 130, and the communicator are not always physically distinguished from each other. For example, the main controller 110, the storage 130, and the communicator 140 may be implemented as a single chip, or may also be implemented as different chips.

Although the touchscreen display 120, the storage 130, the communicator 140, the dispenser 150, the cooler 150, the temperature sensor 170, the audio part 180, and the main controller 110 contained in the refrigerator 1 have been described above, new constituent elements or some other constituent elements may herein be omitted for convenience of description as necessary.

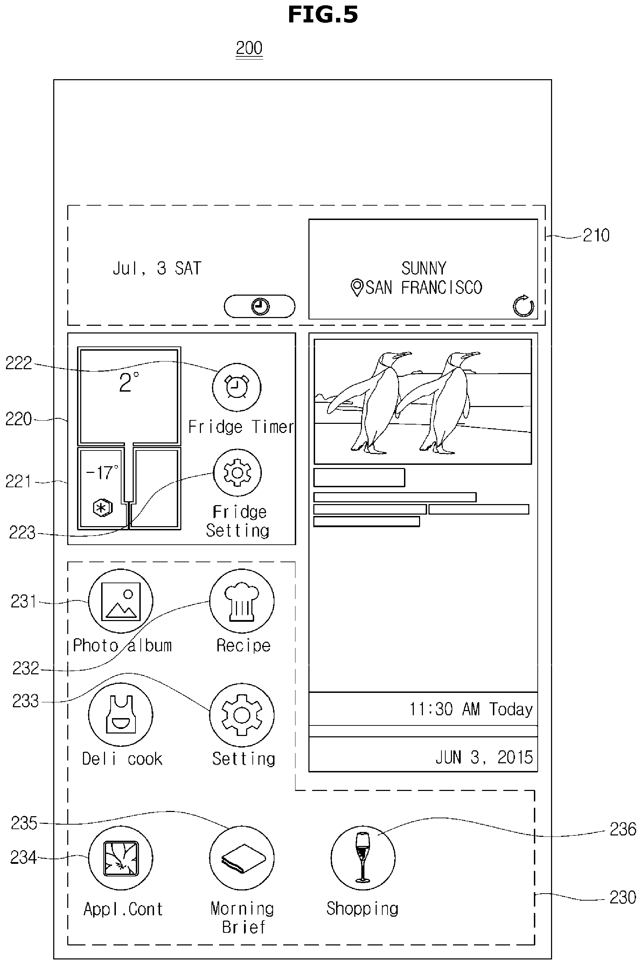

FIG. 5 is a view illustrating a home screen displayed on the touchscreen display contained in the refrigerator according to an embodiment of the present disclosure.

If the refrigerator 1 is powered on, the main controller 110 may control the touchscreen display 120 to display the home screen 200 as shown in FIG. 5.

The home screen 200 may display a time/date display region 210 to display time and date information; an operation information display region 220 to display operation information of the refrigerator 1; and a plurality of launchers 230 to execute the application stored in the storage 130.

Current time and date information may be displayed on the time/date display region 210. In addition, information (e.g., name of the country or city) of a current position of the refrigerator 1 may be displayed in the time/date display region 210. The storage chamber map 221 related to the operations of the storage chambers (20a, 20b, 20c) contained in the refrigerator 1 may be displayed on the operation information display region 220.

Information related to the operation of the storage chambers (20a, 20b, 20c) contained in the refrigerator 1 may be displayed on the storage chamber map 221. For example, as shown in FIG. 5, the upper storage chamber 20a, the first lower storage chamber 20b, and the second lower storage chamber 20c may be separated from one another and then displayed on the storage chamber map 221. A target temperature of the upper storage chamber 20a, a target temperature of the first lower storage chamber 20b, and a target temperature of the second lower storage chamber 20c may also be displayed on the storage chamber map 221.

When the user touches regions indicating the respective storage chambers (20a, 20b, 20c), the main controller 110 may display an image for displaying the target temperatures of the respective storage chambers (20a, 20b, 20c) on the touchscreen display 120. For example, when the user touches the region indicating the upper storage chamber 20a from among the storage chamber map 221, the image for establishing the target temperature of the upper storage chamber 20a may be displayed on the touchscreen display 120.

A timer setting icon 222 for controlling the operation of the timer and a refrigerator setting icon 223 for controlling the operation of the refrigerator 1 may be displayed on the operation information display region 220.

If the user touches the timer setting icon 222, the timer setting screen for setting the target time of the timer may be displayed on the touchscreen display 120. For example, the user may input an alarm output time, a time interval for alarm output, etc. through the timer setting image. The refrigerator 1 may output alarm sound at a predetermined time established by the user. If the time interval established by the user has elapsed, the refrigerator 1 may output the alarm sound.

If the user touches the refrigerator setting icon 223, the main controller 110 may display the operation setting screen through which the user can input the setting value for controlling the operation of the refrigerator 1 may be displayed on the touchscreen display 120. For example, the user may establish the target temperatures of the storage chambers (20a, 20b, 20c) contained in the refrigerator 1 through the operation setting screen, and may determine which one of water and ice will be discharged through the dispenser 150.

In addition, the plurality of launchers 230 for executing various applications stored in the storage 130 may be displayed on the home screen 200 according to a user input signal.

For example, an album launcher 231, a recipe launcher 232, a screen setting launcher 233, etc. may be displayed on the home screen 200. The album launcher 231 may launch the album application to display pictures (photo images) stored in the storage 130. The recipe launcher 232 may launch the recipe application to provide food recipes. The screen setting launcher 233 may launch the screen setting application to control the operation of the touchscreen display 120.

In addition, an electronic-appliance control launcher 234, a sound output setting launcher 235, an online shopping launcher 236, etc. may be displayed on the home screen 200. The electronic-appliance control launcher 234 may launch the electronic-appliance control application to control various electronic appliances through the refrigerator 1. The sound output setting launcher 235 may establish the operation of the sound output application configured to audibly output various contents. The online shopping launcher 236 may launch the shopping application for the online shopping.

As described above, the principal information related to the operations of the refrigerator 1 and the launchers for executing various applications may be displayed on the home screen 200 of the refrigerator 1.

However, FIG. 5 illustrates one example of the home screen 200, the refrigerator 100 may display a variety of home screens according to the user setting information or the like, and the scope or spirit of information displayed on the home screens and launchers is not limited thereto.

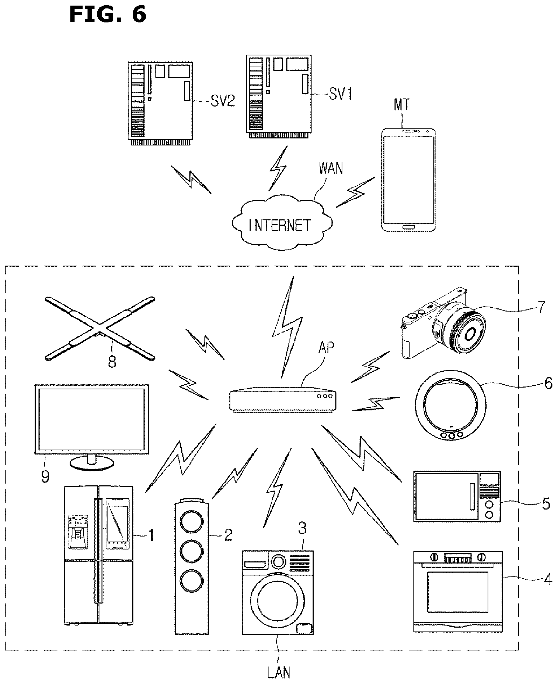

FIG. 6 is a conceptual diagram illustrating a method for communicating with the external part through a communicator contained in the refrigerator according to an embodiment of the present disclosure.

The refrigerator 1 may communicate with various electronic appliances through the communicator 140.

For example, the refrigerator 1 may connect to the access point (AP) through the communicator 140 as shown in FIG. 6. Specifically, the refrigerator 1 may connect to the access point (AP) according to wireless communication standards, for example, Wi-Fi™ IEEE 802.11, Bluetooth™ IEEE 802.15.1, ZigBee IEEE 802.15.4, etc.

The access point (AP) may be referred to as a hub, a router, a switch, a gateway, or the like. The AP may also connect to a Wide Area Network (WAN) such as the Internet.

The AP may be connected to various electronic appliances, for example, the refrigerator 1, an air-conditioner 2, a washing machine 3, an oven 4, a microwave oven 5, a robot cleaner 6, a security camera 7, an electric light 8, a television 9, etc.

In addition, the electronic appliances 1 to 9 connected to the AP may construct a local area network (LAN).

As described above, the AP may implement communication between the LAN formed by the electronic appliances connected to the AP and the WAN such as the Internet.

A service server SV1 for providing the electronic appliances 1 to 9 with predetermined services and a shopping mall server SV2 for online purchase of goods or products may be connected to the WAN.

A mobile terminal MT may be connected to the WAN. The mobile terminal MT may directly connect to the WAN according to the position thereof, or may connect to the WAN through the AP. For example, when the mobile terminal MT is located in close vicinity to the AP, the mobile terminal MT may connect to the WAN through the AP. If the mobile terminal MT is located far away from the AP, the mobile terminal MT may directly connect to the WAN through a mobile communication service provided from the mobile communication enterprise.

The refrigerator 1 may transmit data to the service server SV1 and/or the shopping mall server SV2 through the AP, and may receive data from the service server SV1 and/or the shopping mall server SV2.

For example, the refrigerator 1 may transmit a control command for controlling the air conditioner 2, the washing machine 3, the oven 4, the microwave oven 5, the robot cleaner 6, the security camera 7, the electric light 8, or the television 9 to the service server SV1 through the AP. The service server SV1 may transmit a control command of the refrigerator 1 to the air conditioner 2, the washing machine 3, the oven 4, the microwave oven 5, the robot cleaner 6, the security camera 7, the electric light 8, or the television 9. In addition, the air conditioner 2, the washing machine 3, the oven 4, the microwave oven 5, the robot cleaner 6, the security camera 7, the electric light 8, or the television 9 may transmit operation information thereof to the service server SV1 through the AP. The service server SV1 may transmit operation information of the air conditioner 2, the washing machine 3, the oven 4, the microwave oven 5, the robot cleaner 6, the security camera 7, the electric light 8, or the television 9 to the refrigerator 1.

In another example, the refrigerator 1 may receive information on products (or commodities) from the shopping mall server SV2 through the AP, and may transmit order information of the product selected by the user to the shopping mall server SV2.

As described above, the refrigerator 1 may communicate with the service server SV1, and may transmit a control command to the electronic appliances 2 to 9 through the service server SV1. In addition, the refrigerator 1 may communicate with the shopping mall server SV2, and may purchase products (or commodities) through the shopping mall server SV2.

The constituent elements and the principal operations of the refrigerator 1 have been disclosed above.

Detailed operations of the refrigerator 1 will hereinafter be given.

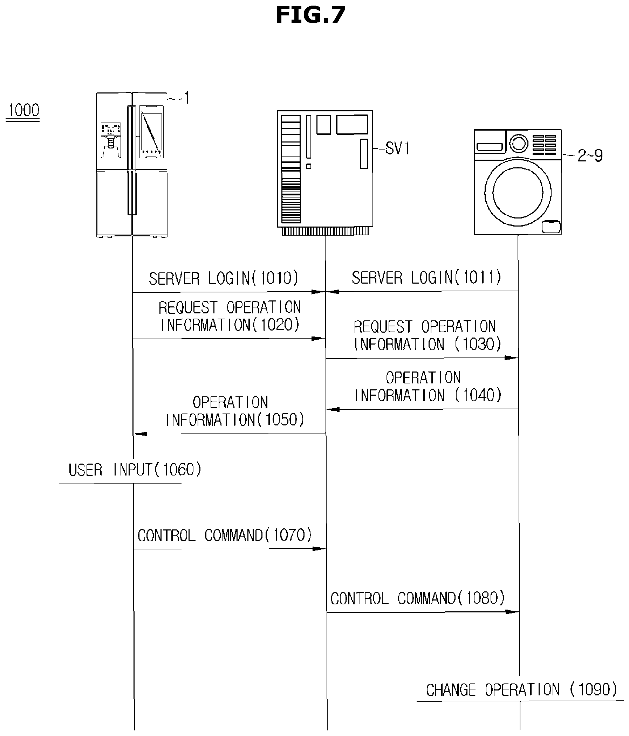

FIG. 7 is a flowchart illustrating a method for allowing the refrigerator to control electronic appliances according to an embodiment of the present disclosure. FIG. 7 is a flowchart illustrating a method 1000 for controlling electronic appliances using the refrigerator 1.

The refrigerator 1 may log in to the service server SV1 in operation 1010.

If the user touches the home appliance control launcher 234 displayed on the home screen 200 (see FIG. 5), the refrigerator 1 may execute the home appliance control application, and may connect to the service server SV1 through the home appliance control application.

Thereafter, in order to log in to the service server SV1, the refrigerator 1 may display the login screen on the touchscreen display 120, and the refrigerator 1 may acquire login information from the user through the login screen. The login information may include at least one of user account information (e.g., account ID), identification (ID) information (e.g., MAC address) of the refrigerator 1, and authentication information (e.g., password) of the service server SV1. In addition, the refrigerator 1 may acquire an authentication code of the AP through the login screen. The refrigerator 1 may transmit login information entered by the user to the service server SV1 through the AP.

The login screen for allowing the user to log in to the service server SV1 will hereinafter be described.

In addition, when login information of the service server SV1 is stored in the storage 130 in advance, the refrigerator 1 may transmit the pre-stored login information to the service server SV1.

The service server SV1 may store the ID information of the refrigerator 1 and the login information of the user in advance. For example, the user may transmit ID information (e.g., Universal Unique Identifiers (UUID), Internet Protocol Address (IP Address), Medial Access Control address (MAC address), etc.) of the refrigerator 1 to the service server SV1 through the mobile terminal MT or the like, and may register the ID information of the refrigerator 1 in the user account information of the service server SV1. In addition, ID information of the remaining electronic appliances 2 to 9 other than the refrigerator 1 may be stored in the service server SV1. For example, the user may transmit ID information of the electronic appliances 2 to 9 through the registered refrigerator 1 or the registered mobile terminal MT, and may register ID information of the electronic appliances 2 to 9 in the user account of the service server SV1. In other words, the refrigerator 1 and the electronic appliances 2 to 9 may be pre-registered in the user account of the service server SV1.

Upon receiving the login request of the refrigerator 1, the user account information and the user authentication information, the service server SV1 may compare the pre-stored login information with the received login information. If the pre-stored login information is identical to the received login information, the service server SV1 may permit login to the refrigerator 1. In other words, if the pre-stored login information is same to the received login information, the service server SV1 may provide the refrigerator 1 with necessary services.

The plurality of electronic appliances 2 to 9 may also log in to the service server SV1 in operation 1011.

Each of the electronic appliances 2 to 9 may log in to the service server SV1 in a different way from the above-mentioned method for allowing the refrigerator 1 to log in to the service server SV1. For example, the washing machine 3 may connect to the service server SV1 through the AP, and may transmit login information to the service server SV1 through the AP. The login information may include at least one of the user account information (e.g., account ID), ID information (e.g., MAC address) of the washing machine 3, and the authentication information (e.g., password) of the service server SV1.

Upon receiving the login request of the washing machine 3, the service server SV1 may compare the pre-stored login information with the received login information. If the pre-stored login information is same to the received login information, the service server SV1 may permit login to the washing machine 3.

The refrigerator 1 may request operation information of the electronic appliances 2 to 9 from the service server SV1 in operation 1020.

In order to control the operations of the electronic appliances 2 to 9 according to a user input signal, the refrigerator 1 may acquire operation information of the plurality of electronic appliances 2 to 9.

Although the refrigerator 1 may not store access information (e.g., IP address) of the electronic appliances 2 to 9, the service server SV1 may store access information (e.g., IP address) of the electronic appliances 2 to 9 so as to provide the electronic appliances 2 to 9 with necessary services.

Therefore, the refrigerator 1 may request operation information of the electronic appliances 2 to 9 through the service server SV1.

The service server SV1 having received the operation information of the electronic appliances 2 to 9 may request operation information from the electronic appliances 2 to 9 in operation 1030.

The service server SV1 may request operation information from the electronic appliances 2 to 9 using the pre-stored access information of the electronic appliances 2 to 9.

The electronic appliances 2 to 9 having received the operation information from the service server SV1 may transmit operation information thereof to the service server SV1 in operation 1040.

The electronic appliances 2 to 9 may transmit a variety of operation information.

For example, the air conditioner 2 may transmit a variety of information (e.g., operation or non-operation of the air-conditioner, a target temperature, a room temperature, etc.) to the service server SV1. In addition, the washing machine 3 may transmit a variety of information (e.g., operation or non-operation of the washing machine, the remaining time to be consumed for washing completion during operation of the washing machine, etc.) to the service server SV1. In addition, the oven 4 and the microwave oven 5 may transmit a variety of information (e.g., a current cooking state of food, the remaining time to be consumed for cooking completion during the cooking state, etc.) to the service server SV1. In addition, the robot cleaner 6 may transmit a variety of information (e.g., a current cleaning state) to the service server SV1. In addition, the security camera 7 may transmit at least one captured image to the service server SV1, and the electric light 8 and the television 9 may transmit on/off state information thereof to the service server SV1.

The service server SV1 having received the operation information from the plurality of electronic appliances 2 to 9 may transmit the received operation information to the refrigerator in operation 1050.

The service server SV1 may transmit operation information to the refrigerator 1 using the pre-stored access information of the refrigerator 1.

The refrigerator 1 having acquired operation information of the electronic appliances 2 to 9 from the service server SV1 may display operation information of the electronic appliances 2 to 9, and may receive the user input signal in operation 1060.

In order to control the electronic appliances 2 to 9, the refrigerator 1 may display a control screen on the touchscreen display 120.

The refrigerator 1 may display operation information on the electronic appliances 2 to 9 through the control screen, and may receive a user input signal including a user control command.

The control screen for controlling the electronic appliances 2 to 9 will hereinafter be described in detail.

The refrigerator 1 may transmit the control command received from the user to the service server SV1 in operation 1070.

The refrigerator 1 may transmit various control commands.

For example, the refrigerator 1 may transmit a target temp change command for the air conditioner 2, a washing start command for the washing machine 3, a cooking start command for the oven 4 and the microwave oven 5, and a cleaning start command and cleaning mode change command for the robot cleaner 6, etc.

The service server SV1 having received the control command from the refrigerator 1 may transmit the received control command to the respective electronic appliances 2 to 9 in operation 1080.

The service server SV1 may transmit the respective control commands to the respective electronic appliances 2 to 9 according to a target electronic appliance contained in the control command received from the refrigerator 1.

For example, the service server SV1 may transmit the target temperature change command of the air conditioner 2 to the air conditioner 2, may transmit the washing start command of the washing machine 3 to the washing machine 3, may transmit the cooking start command of the oven 4 and/or the microwave oven 5 to the oven 4 and/or the microwave oven 5, and may transmit the cleaning start command and the cleaning mode change command of the robot cleaner 6 to the robot cleaner 6.

The electronic appliances 2 to 9 having received the control command may change the operation thereof according to the received control command in operation 1090.

For example, the air conditioner 2 having received the target temperature change command may change a target room temperature. The washing machine 3 having received the washing start command may start the washing operation. The oven 4 and/or the microwave oven 5 having received the cooking start command may start the cooking operation. In addition, the robot cleaner 6 having received the cleaning start command and/or the cleaning mode change command may change the cleaning operation or may change the cleaning mode.

In addition, the electronic appliances 2 to 9, the operations of which are changed according to the control commands, may transmit operation information corresponding to the changed operation to the refrigerator 1 through the service server SV1.

As described above, although the refrigerator 1 acquires operation information of the electronic appliances 2 to 9 through the service server SV1 and transmits the control commands to the respective electronic appliances 2 to 9 through the service server SV1, the scope or spirit of the present disclosure is not limited thereto. For example, the refrigerator 1 may acquire operation information of the electronic appliances 2 to 9 through the AP, and may transmit the control commands to the electronic appliances 2 to 9 through the AP.

As described above, the refrigerator 1 may display the operation information of the electronic appliances 2 to 9 for user recognition, and may transmit the control commands to the electronic appliances 2 to 9 according to the user input signal.

The login screen and the control screen will hereinafter be described.

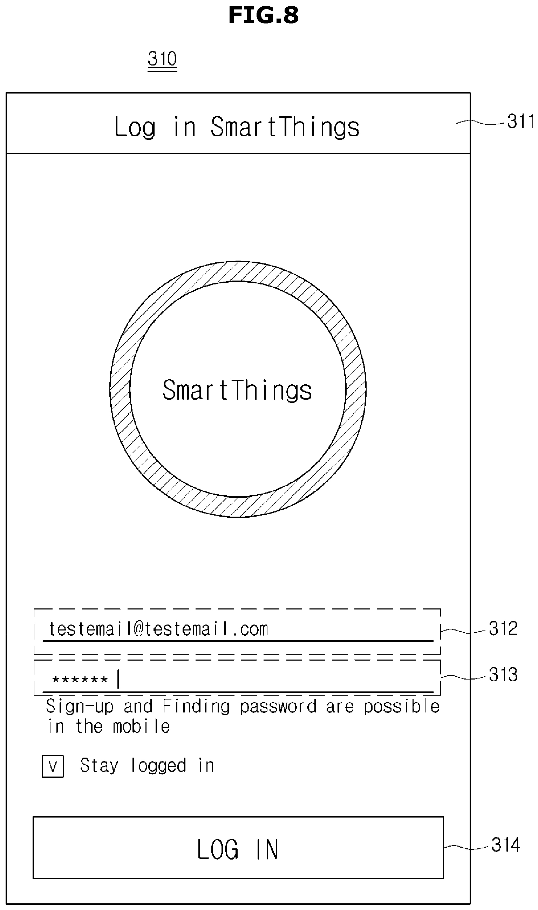

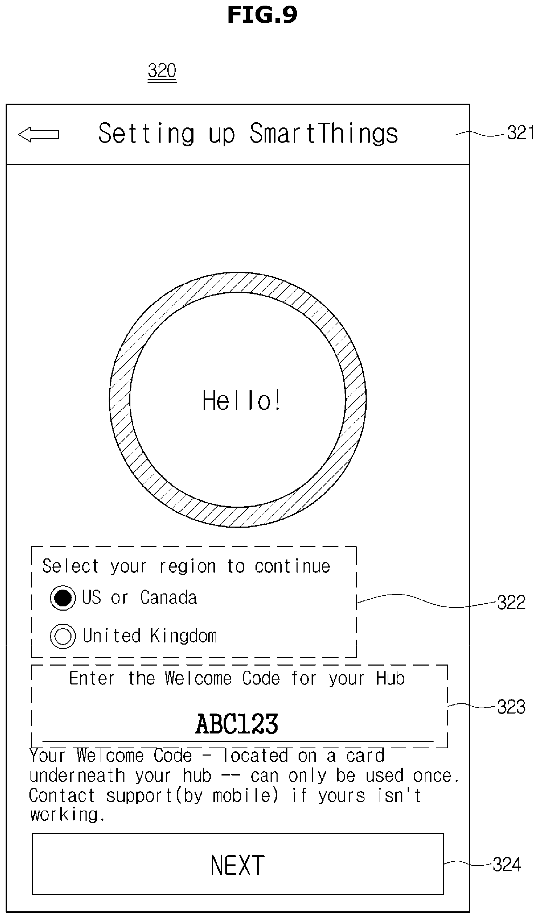

FIGS. 8 and 9 are exemplary views illustrating a login screen displayed on the refrigerator according to an embodiment of the present disclosure.

As described above, in order to log in to the service server SV1, the refrigerator 1 may display the login screen on the touchscreen display 120, and may acquire login information from the user through the login screen. In addition, the refrigerator 1 may acquire the authentication code of the AP through the login screen.

For example, when the user touches the electronic appliance control launcher 234 displayed on the home screen 200, the refrigerator 1 may display a first login screen 310 of FIG. 8 on the touchscreen display 120.

The refrigerator 1 may acquire user account information and authentication information for the service server SV1 through the first login screen 310.

The first login screen 310 may include a title region 311, an account information input region 312, an authentication information input region 313, and a login command button 314.

The title region 311 may display letters, numbers, symbols, and/or images indicating that the screen displayed on the touchscreen display 120 is a login screen for allowing the user to access the service server SV1. For example, "Log in SmartThings" may be displayed in the title region 311.

The account information input region 312 may receive user account information from the user. For example, when the user touches the account information input region 312, the refrigerator 1 may display a keypad through which the user can input letters, numbers, and/or symbols on the touchscreen display 120. The user may input his or her account information through the keypad displayed on the touchscreen display 120. The refrigerator 1 may acquire user account information through the touchscreen display 120. For example, the user account information may be an E-mail address.

The authentication information input region 313 may receive user authentication information from the user. For example, when the user touches the authentication information input region 313, the refrigerator 1 may display the keypad through which the user can input letters, numbers, and/or symbols on the touchscreen display 120. In addition, the user may input authentication information through the keypad displayed on the touchscreen display 120, and the refrigerator 1 may acquire user authentication information through the touchscreen display 120.

After the user inputs the account information and the authentication information, the user may touch the login command button 314.

When the user touches the login command button 314, the refrigerator 1 may encrypt the user-input account information and the user-input authentication information, and may store the encrypted account information and authentication information.

When the user touches the login command button 314, the refrigerator 1 may display the second login screen 320 of FIG. 9 on the touchscreen display 120.

The refrigerator 1 may acquire the authentication code of the AP through the second login screen 320.

The second login screen 320 may include a title region 321, a country selection region 322, an authentication code input region 323, and a NEXT button 324.

The title region 311 may display letters, numbers, symbols, and/or images indicating that the screen displayed on the touchscreen display 120 is used to establish the electronic appliance control application. For example, "Setting up SmartThings" may be displayed on the title region 321.

The country selection region 312 may allow the user to select a country in which the user resides. The respective countries may use different frequency bands through which the refrigerator 1 can communicate with the AP. Therefore, in order for the refrigerator to communicate with the AP without interference from other communication devices, the refrigerator 1 may allow the user to select his or her country. For example, as shown in FIG. 9, the list of countries capable of being selected by the user may be displayed on the country selection region 312, the user may select any one of the plurality of countries displayed on the country selection region 312.

The authentication code input region 323 may receive the authentication code of the AP from the user. For example, when the user touches the authentication code input region 323, the refrigerator 1 may display the keypad through which the user can input letters, numbers, and/or symbols on the touchscreen display 120. In addition, the user may input the authentication code through the keypad displayed on the touchscreen display 120, and the refrigerator 1 may acquire user authentication information through the touchscreen display 120.

After the user selects the country and the authentication code, the user may touch the NEXT button 324.

When the user touches the NEXT button 324, the refrigerator 1 may transmit the authentication code to the AP. Upon receiving the access permission message from the AP, the refrigerator 1 may establish communication with the AP.

Thereafter, the refrigerator 1 may connect to the service server SV1 through the AP, and may transmit the login information to the service server SV1. Specifically, the refrigerator 1 may transmit the user account information and authentication information received through the first login screen 310 to the service server SV1 through the AP.

In order for the refrigerator 1 to log in to the service server SV1, the refrigerator 1 may provide the user with the first and second login screens (310, 320), and may log in to the service server SV1 through the user account information and authentication information received through the first and second login screens (310, 320).

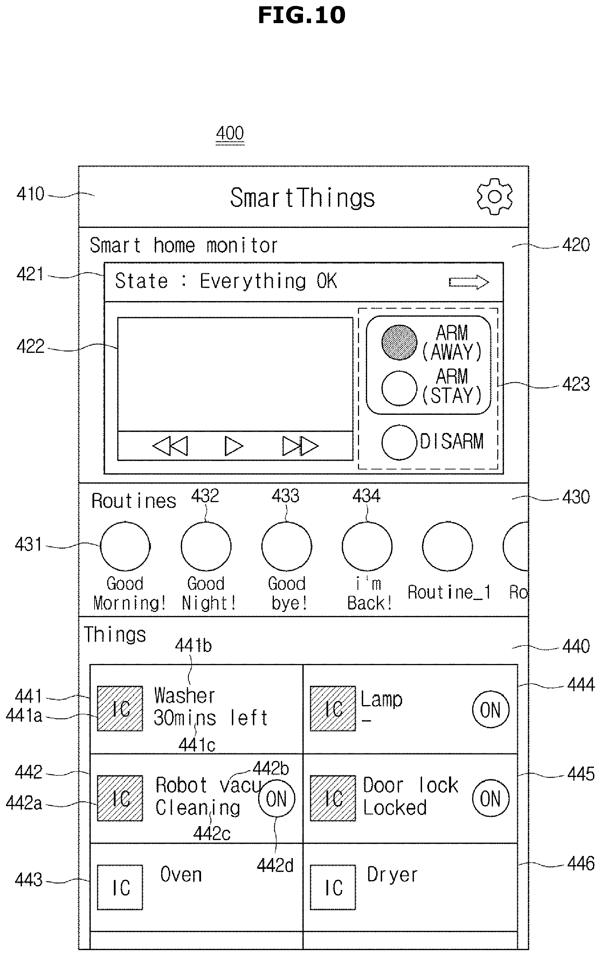

FIGS. 10, 11, 12 and 13 are exemplary views illustrating control screens displayed on the refrigerator according to an embodiment of the present disclosure.

As described above, the refrigerator 1 may display the control screen on the touchscreen display 120 so as to control the plurality of electronic appliances 2 to 9, the refrigerator 1 may display operation information of the electronic appliances 2 to 9 through the control screen, and may receive a user input signal including a user control command from the user. The refrigerator 1 may transmit the input control command to the electronic appliances 2 to 9 through the service server SV1.

For example, the refrigerator 1 may display the control screen 400 of FIG. 10 on the touchscreen display 120.

The control screen 400 may include a title region 410, a home security region 420, a routine selection region 430, and an operation information display region 440.

The title region 410 may display letters, numbers, symbols, and/or images indicating that the screen displayed on the touchscreen display 120 is used to control the electronic appliances. For example, "SmartThings" may be displayed on the title region 410.

The home security region 420 may provide the user with information regarding the dangerous elements. For example, information as to whether any invader invades the user's home, the presence or absence of a gas leak, the presence or absence of electric leakage, and/or the presence or absence of water leakage may be provided to the user through the home security region 420.

Specifically, the home security region 420 may include a security state display region 421 to display a security state, an image display region 422 to display images received from the security camera 7, and a security setting region 423 through which the user can select a desired security level.

The security state display region 421 may display information regarding the security state determined on the basis of the image received from the security camera 7 using letters, symbols, and/or images. Specifically, when there is no security problem, the security state display region 421 may display letters, symbols, and/or images indicating the absence of the security problem. For example, when there is no security problem, "Everything OK" may be displayed on the security state display region 421. If the presence of the invader is detected, the security state display region 421 may display letters, symbols, and/or images indicating the presence of the invader. For example, if the presence of the invader is detected, "Intrusion detected!" may be displayed on the security state display region 421.

The image display region 422 may display images received from the security camera 7. For example, if the invader is detected, the refrigerator 1 may display images received from the security camera 7 on the image display region 422. The user may recognize the presence or absence of the invader on the basis of the image displayed on the image display region 422.

The security setting region 423 may allow the user to select the alarm setting function. Specifically, when it is determined that the user is located in his or her home through the security setting region 423, the security setting region 423 may allow the user to select a specific command indicating whether a security alarm message will be transmitted to the user. When it is determined that the user is not located in his or her home, the security setting region 423 may allow the user to select any one of a command indicating whether the security alarm message will be transmitted to the user and the other command indicating whether the security alarm message will not be transmitted to the user.

The operation information display region 440 may display operation information of the electronic appliances 2 to 9, and may receive the control commands of the electronic appliances 2 to 9 from the user.

Specifically, the operation information display region 440 may be partitioned into a plurality of detailed information display regions (441, 442, 443, 444, 445, 446). The respective detailed information display regions (441, 442, 443, 444, 445, 446) may display operation information of the electronic appliances 2 to 9. For example, as shown in FIG. 10, the first detailed information display region 441 may display operation information of the washing machine 3, and the second detailed information display region 442 may display operation information of the robot cleaner 6. The third detailed information display region 443 may display operation information of the oven 4.

The images (441a, 442a) indicating the electronic appliances 2 to 9, the names (441b, 442b) of the electronic appliances 2 to 9, the operation information (441c, 442c) of the electronic appliances 2 to 9, and the control command button 442d of the electronic appliances 2 to 9 may be displayed on the plurality of detailed information display regions (441, 442, 443, 444, 445, 446).

The representative images (441a, 442a) may include representative images of the electronic appliances 2 to 9 so as to allow the user to easily identify each of the electronic appliances 2 to 9. For example, the representative image 441a of the washing machine 3 may be displayed on the first detailed information display region 441 indicating the operation information of the washing machine 3.

The representative images (441a, 442a) may be displayed in a manner that one electronic appliance connected to the AP and the other electronic appliance not connected to the AP can be distinguished from each other. For example, as shown in FIG. 10, the representative image of the washing machine 3 connected to the AP and the representative image of the oven 4 not connected to the AP may be distinguished from each other.

The names (441b, 442b) may refer to the electronic appliances 2 to 9, and may include a combination of well-known letters, numbers, and/or symbols. For example, "Washer" indicating the washing machine 3 may be displayed on the first detailed information display region 441 indicating the operation information of the washing machine 3.

The operation information (441c, 442c) may include different kinds of information according to the respective electronic appliances 2 to 9. For example, when the washing machine 3 is in a current washing state, the remaining time to be consumed for washing completion may be displayed on the first detailed information display region 441 indicating operation information of the washing machine 3. In addition, information as to whether the robot cleaner 6 is in a current cleaning state may be displayed on the second detailed information display region 442 indicating operation information of the robot cleaner 6.

The operation information of the electronic appliance not connected to the AP may not be displayed in the first detailed information display region 441. For example, the operation information of the oven 4 not connected to the AP may not be displayed in the first detailed information display region 441.

The control command button 442d may include the operation start command for activating the electronic appliances 2 to 9 and the operation stop command for deactivating the electronic appliances 2 to 9. In addition, any one of the operation start command and the operation stop command may be displayed according to the operation states of the electronic appliances 2 to 9. For example, when the robot cleaner 6 is in a current operation state, the operation stop command may be displayed in the second detailed information display region 442. When the robot cleaner 6 is in a standby state, the operation start command may be displayed in the second detailed information display region 442.

However, the scope of the control command button 442d is not limited to the operation start command and the operation stop command. For example, the control command button 442d may include a cleaning mode change command for changing the cleaning mode of the robot cleaner 6, a target temperature change command for changing the target temperature of the air conditioner 2, a channel change command for changing the channel of the television 9, etc.

The control command of the electronic appliance not connected to the AP may not be displayed. For example, the control command of the oven 4 not connected to the AP may not be displayed.

If the user touches the image (441a or 442a) and/or the name (441b or 442b), the detailed control screen may be displayed on the touchscreen display 120.

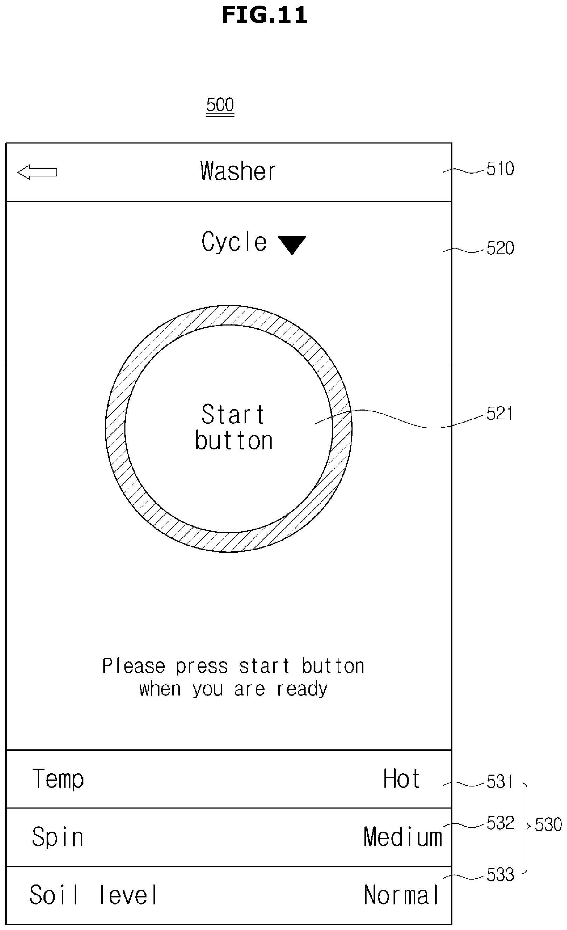

For example, when the user touches the representative image 441a and/or the name 441b of the washing machine 3 displayed on the first detailed information display region 441, the refrigerator 1 may display the washing machine control screen 500 of FIG. 11 on the touchscreen display 120.

The washing machine control screen may include a title region 510, a control command region 520, and a detailed setting region 530.

The title region 510 may display letters, numbers, symbols, and/or images indicating that the screen displayed on the touchscreen 120 is used to control the washing machine 3. For example, "Washer" may be displayed on the title region 510.

The control command region 520 may receive a control command from the user. For example, the washing start button 521 may be displayed on the control command region 520. If the user touches the washing start button 521, the refrigerator 1 may transmit the washing start command to the washing machine through the service server SV1.

The detailed setting region 530 may receive a washing temperature, a dehydration speed, a detergent density, etc. needed to perform the washing function. For example, the detailed setting region 530 may include a washing temperature selection region 531 for selecting the washing temperature, the dehydration speed selection region 532 for selecting the dehydration speed, and the detergent density selection region 533 for selecting detergent density.

When the user touches the control command button 442d, the control command corresponding to the touched control command button 442d may be transmitted to the electronic appliances 2 to 9 through the service server SV1. In addition, the operation information 441c and 442c of the electronic appliances 2 to 9 may be updated according to the transmitted control command.

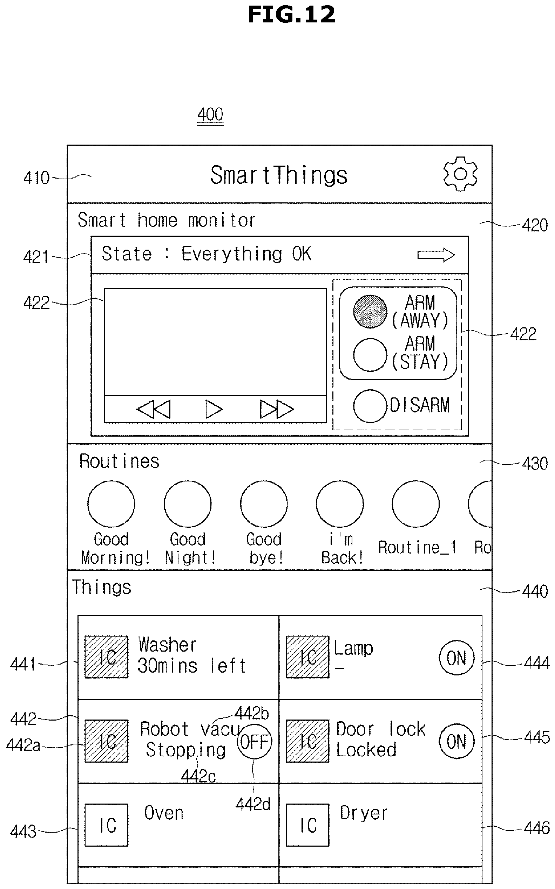

For example, when the user touches the control command button 442d of the second detailed information display region 442 during the cleaning operation of the robot cleaner 6, the cleaning operation of the robot cleaner 6 may be stopped, and the operation information 442c for indicating stoppage of the cleaning operation may be displayed on the second detailed information display region 442 as shown in FIG. 12.

The pre-stored routine or the user-established routine may be displayed in the routine selection region 430. The routine may be a group of control commands of the electronic appliances 2 to 9.

The user may group the control commands to be applied to the electronic appliances 2 to 9 according to environmental information, thereby forming the routine. For example, the operation stop command of the robot cleaner 6 and the mode change command of the air conditioner 2 may be grouped, resulting in formation of a single routine. Specifically, the operation stop command of the robot cleaner 6 may stop the robot cleaner 6 so as to prevent occurrence of noise late at night. The mode change command of the air conditioner 2 may change the operation mode of the air conditioner 2 to the sleeping mode so as to prevent occurrence of noise late at night.

A plurality of routines (431, 432, 433, 434) may be displayed on the routine selection region 430.

If the user touches any one of the routines (431, 432, 433, 434), the refrigerator 1 may transmit a control command contained in the selected routine to the electronic appliances 2 to 9 through the service server SV1. In addition, the operation information (that is displayed on the operation information display region 440) of the electronic appliances 2 to 0 may be updated according to the operation change of the electronic appliances 2 to 9.

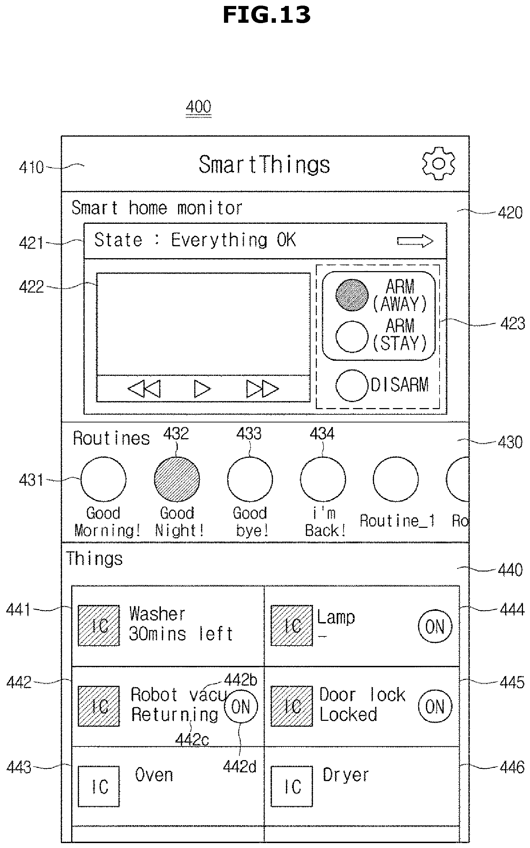

For example, when the user touches the "Good Night!" routine 432 shown in FIG. 13, the control command contained in the "Good Night!" routine 432 may be transmitted to the plurality of electronic appliances 2 to 9 through the service server SV1. For example, when the operation stop command of the robot cleaner 6 is contained in the "Good Night!" routine 432, the robot cleaner 6 may stop the cleaning operation, and may return to the charging station. In addition, the operation information 442c for indicating return of the robot cleaner 6 may be displayed on the second detailed information display region 442 for displaying the operation information of the robot cleaner 6.

As described above, the refrigerator 1 may display the login screens (410, 420) for accessing the service server SV1 and the control screen 500 for controlling the electronic appliances 2 to 9.

A function for audibly outputting content using the refrigerator according to the embodiments of the present disclosure will hereinafter be given.

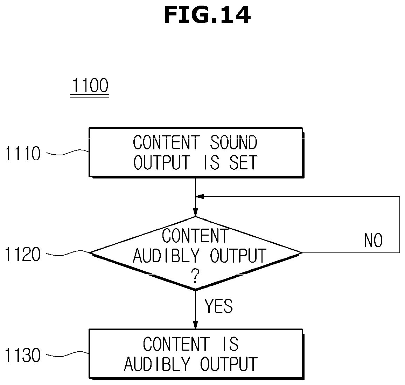

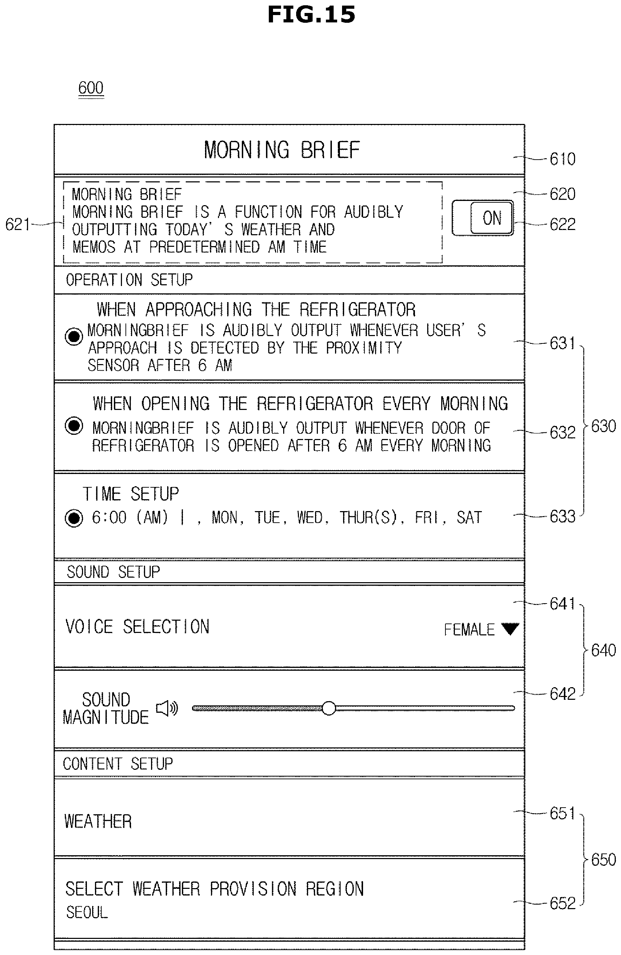

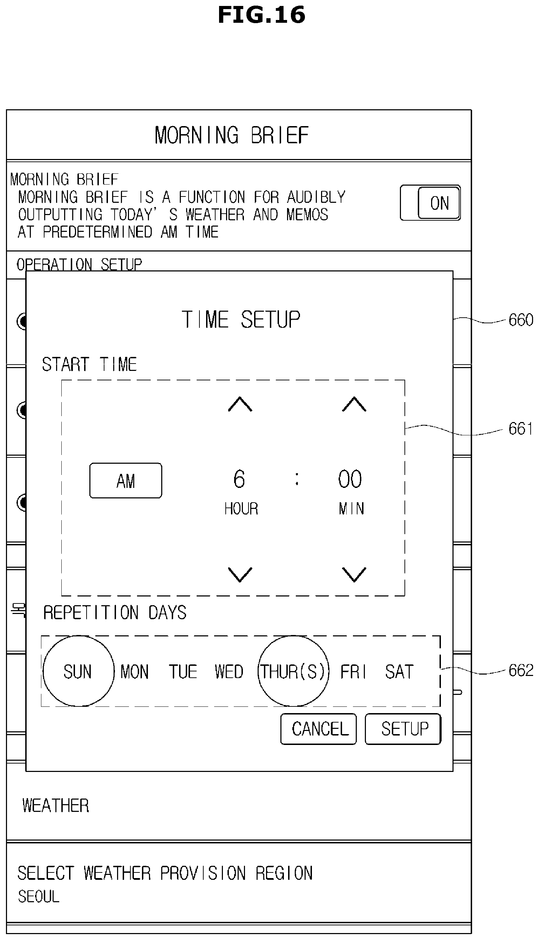

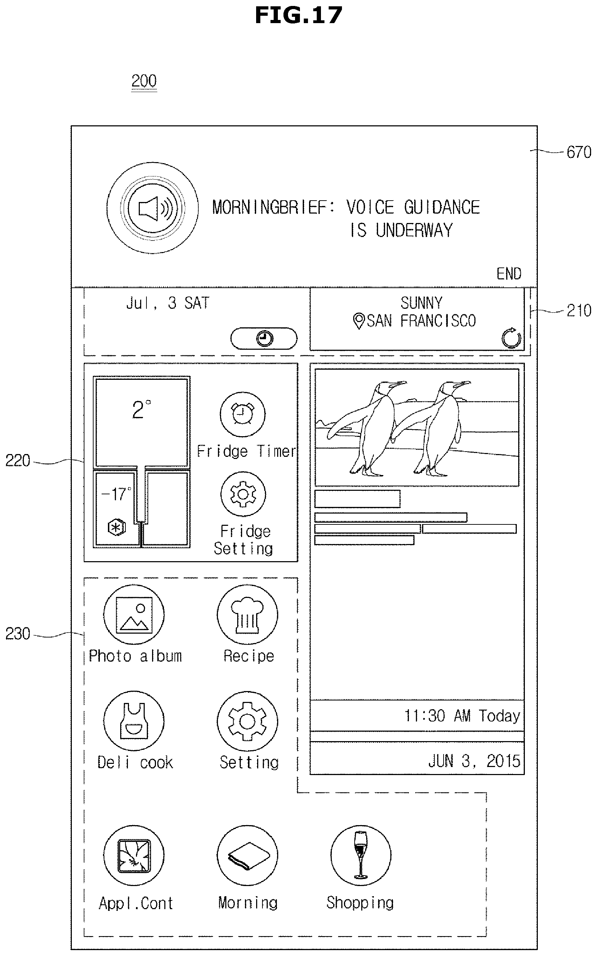

FIG. 14 is a flowchart illustrating a method for allowing the refrigerator to audibly output content according to an embodiment of the present disclosure. FIGS. 15 and 16 are exemplary views illustrating setup screen images displayed on the refrigerator according to an embodiment of the present disclosure. FIG. 17 is an exemplary view illustrating the home screen through which the refrigerator can audibly output the content according to an embodiment of the present disclosure.

The content-sound output function 1100 for allowing the refrigerator 1 to audibly output the content will hereinafter be described with reference to FIGS. 14, 15, 16, and 17.

The refrigerator 1 may acquire the setting information related to the content sound output in operation 1100.

If the user touches the sound output setting launcher 235 displayed on the home screen 200 (see FIG. 5), the refrigerator 1 may launch the sound output application, and the refrigerator 1 may display the setup screen for acquiring the setting information related to the content sound output through the sound output application.

For example, in order to acquire the setting information related to the content sound output, the refrigerator 1 may display the setup screen 600 of FIGS. 15 and 16 on the touchscreen display 120.

The setup screen 600 may include a title region 610, a sound output activation region 620, a trigger setting region 630, a sound setting region 640, and a content setting region 650.

The title region 610 may display letters, numbers, symbols, and/or images indicating that the screen displayed on the touchscreen display 120 is used to allow the user to enter the setting information related to the information sound. For example, an exemplary title "Morning Brief' may be displayed in the title region 610.

The sound output activation region 620 may display a message 621 to briefly explain the content sound output function, and a toggle button 622 to activate or deactivate the content sound output.

The activation toggle button 622 may display whether the content sound output is activated or deactivated, and may activate or deactivate the content sound output according to the user input signal. Specifically, when the user touches the activation toggle button 622 during activation of the content sound output, the refrigerator 1 may deactivate the content sound output, and may display letters, numbers, symbols, and/or images indicating deactivation of the content sound output on the activation toggle button 622. In addition, when the user touches the activation toggle button 622 during deactivation of the content sound output, the refrigerator 1 may activate the content sound output, and may display letters, numbers, symbols, and/or images indicating activation of the content sound output on the activation toggle button 622.

The trigger setting region 630 may receive a trigger condition for audibly outputting the content from the user. For example, the information sound output may be carried out when the user performs the predetermined operation.

The trigger condition capable of being selected by the user may be displayed in the trigger setting region 630, and the user may select at least one of the trigger conditions displayed in the trigger setting region 630. For example, the trigger setting region 630 may display a first trigger condition 631 for audibly outputting the content when the user approaches the refrigerator 1; a second trigger condition 632 for audibly outputting the content when the user opens the door 30 of the refrigerator 30; and a third trigger condition 633 for audibly outputting the content at a predetermined time. However, the scope of the trigger condition is not limited to the trigger setting region 430 of FIG. 15, and various trigger conditions may be displayed on the trigger setting region 630.

When the user touches the region on which the third trigger condition 633 is displayed, the refrigerator 1 may display the time setting menu 660 as shown in FIG. 16.

The time setting menu 660 may include the time setting region 661 for establishing a specific time at which the content is audibly output; and the day setting region 662 for establishing the day on which the content sound output will be repeated at intervals of 7 days corresponding to one week.

When the user selects 6AM along with Sunday and Thursday as shown in FIG. 16, the refrigerator 1 may audibly output the predetermined content at 6AM on Sunday and Thursday every week.

The sound setting region 640 may receive tone and volume of the content output sound (or voice) from the user. For example, the user may select whether the content output sound correspond to a male, a female, a kid, or a mechanical sound, and may also select the volume of sound.

The sound setting region 640 may include a tone selection region 641 for selecting a tone of the content output sound (or voice); and a volume selection region 642 for selecting volume of the content output sound (or voice).
When the user touches the tone selection region 641, the refrigerator 1 may display at least one tone (e.g., voice of male, voice of female, voice of kid, and/or mechanical sound) capable of being selected by the user.

In addition, the volume selection region 642 may include a slide bar and a pointer needed to establish sound volume. If the user moves the pointer displayed on the slide bar, the sound volume may be established according to the position of the pointer on the slide bar.

The content setting region 650 may receive the content to be audibly output from the refrigerator 1. For example, the refrigerator 1 may audibly output weather information, headline news, schedule, etc.

The content setting region 650 may include a weather selection region 651 for selecting weather information; and a region selection region 652 for selecting the region, weather information of which will be provided to the user. The user may select weather information as the content to be audibly output, and may select the region, weather information of which will be provided.

As described above, the refrigerator 1 may receive a variety of information (e.g., activation or deactivation of the sound output, a trigger condition, a tone and volume, content to be output, etc.) from the user through the setup screen 600.

Upon receiving the setting information related to the content sound output, the refrigerator 1 may determine whether to audibly output the content in operation 1120.

Specifically, the refrigerator 1 may determine whether the input trigger condition entered by the user who uses the setup screen 600 is satisfied. For example, when the user selects the first trigger condition 631, the refrigerator 1 may determine whether the user approaches the refrigerator 1. When the user selects the second trigger condition 632, the refrigerator 1 may determine whether the door 30 is open or not. In addition, when the user selects the third trigger condition 633, the refrigerator 1 may determine whether the current time is identical to the user input time entered by the user who uses the time setting menu 660.

When the content is not audibly output in operation 1120, the refrigerator 1 may repeatedly perform the operation for determining whether the content will be audibly output.

Specifically, when the trigger condition is not satisfied, the refrigerator 1 may continuously determine whether the trigger condition is satisfied.

In addition, when the content is audibly output in operation 1120, the refrigerator 1 may audibly output the content in operation 1130.

Specifically, when the trigger condition is satisfied, the refrigerator 1 may audibly output the content established in the content setting region 650.
As soon as the sound output is activated, a message 670 indicating the content sound output may be displayed at one side of the touchscreen display 120. For example, the message 670 indicating the content sound output may be displayed to overlap with the home screen 200 as shown in FIG. 17.

The shopping function of the refrigerator configured to provide the online shopping will hereinafter be described.

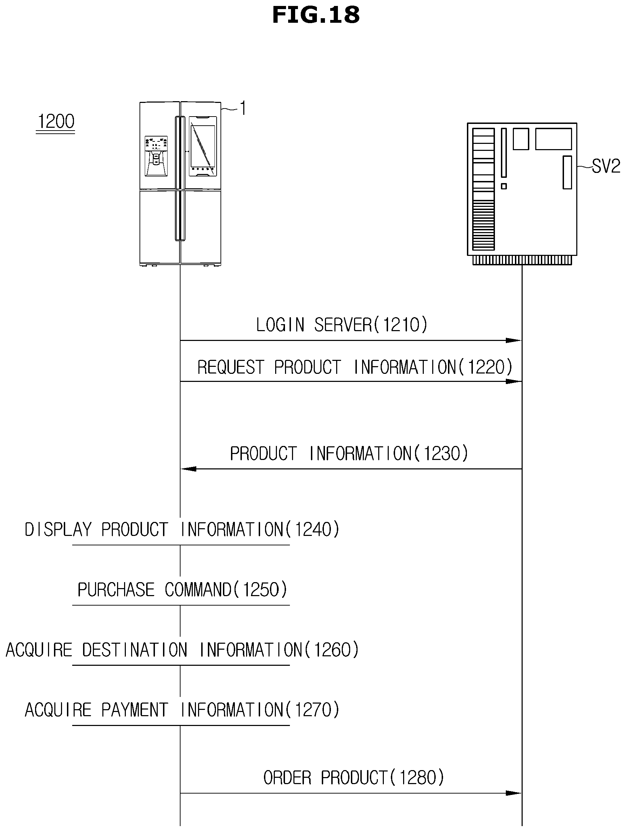

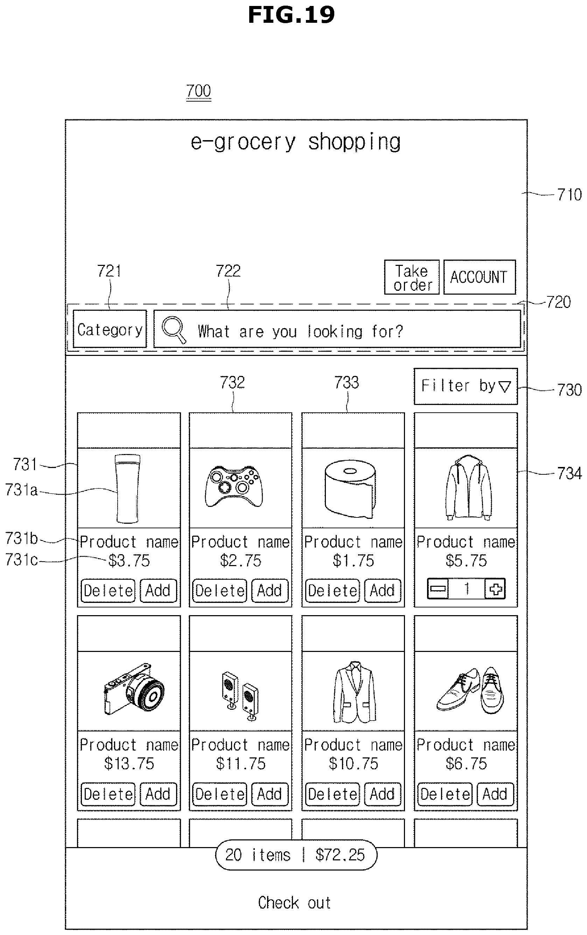

FIG. 18 is a flowchart illustrating a method for allowing the user to purchase products (or commodities) through the refrigerator according to an embodiment of the present disclosure. FIG. 19 is an exemplary view illustrating the shopping screen displayed on the refrigerator according to an embodiment of the present disclosure. A method 1200 for allowing the user to purchase products (or commodities) through the refrigerator 1 will hereinafter be described with reference to FIGS. 18 and 19.

The refrigerator 1 may log in to the shopping mall server SV2 in operation 1210. If the user touches the online shopping launcher 236 displayed on the home screen 200 (see FIG. 5), the refrigerator 1 may launch the shopping application for online shopping, and may connect to the shopping mall server SV2 through the shopping application.

Thereafter, in order for the user to log in to the shopping mall server SV2, the refrigerator 1 may display the login screen on the touchscreen display 120. The refrigerator 1 may acquire login information from the user through the login screen. The login information may include at least one of the user account information (e.g., account ID) and authentication information (e.g., password) of the service server SV1. The refrigerator 1 may transmit user-input login information to the shopping mall server SV2.

In addition, when login information of the shopping mall server SV2 is stored in the storage 130 in advance, the refrigerator 1 may transmit the pre-stored login information to the shopping mall server SV2.

Upon receiving the login request of the refrigerator 1, the user account information and the authentication information, and the shopping mall server SV2 may compare the pre-stored login information with the received login information. When the pre-stored login information is same to the received login information, the login of the refrigerator 1 is permitted.

Thereafter, the refrigerator 1 may request product (or commodity) information from the shopping mall server SV2 in operation 1220.

For example, when the user puts any product (or commodity) in a virtual cart in advance, the refrigerator 1 may request product information of the product stored in the cart from the shopping mall server SV2.

In another example, when the user inputs a keyword for searching for desired products or commodities, the refrigerator 1 may request product information of the product corresponding to the keyword from the shopping mall server SV2.

In another example, when the user selects the product category, the refrigerator 1 may request product information of the product belonging to the user-selected category from the shopping mall server SV2.

The shopping mall server SV2 having received the product information request may transmit the product information to the refrigerator 1 in operation 1230.

For example, the shopping mall server SV2 may transmit product information of the products stored in the virtual cart by the user, product information of the product corresponding to the user-input keyword, and/or product information of the product belonging to the user-selected product category to the refrigerator 1. The product information may include an image of the products, a name of the products, the price of the products, the amount of product stocks, details of the products, etc.

The refrigerator 1 having received the product information may display product information of the user-purchasable products in operation 1240.

The refrigerator 1 may display the list of product information received from the shopping mall server SV2 on the touchscreen display 120.
For example, the refrigerator 1 may display the shopping screen 700 as shown in FIG. 19.

The shopping screen 700 may include a title region 710, a product search region 720, and a communication display region 730.

The title region 710 may display letters, numbers, symbols, and/or images indicating that the screen displayed on the touchscreen display 120 is used for the online shopping. For example, "e-grocery shopping" may be displayed in the title region 710.

The product search region 720 may provide a method for searching for the product in such a manner that the user can select a desired product. For example, the product category search menu 721 for selecting the product category and the keyword input window 722 for allowing the user to input a keyword for selecting the product category may be displayed in the product search region 720. The user may search for a desired product through the product category search menu 721 of the product search region 720 or through the keyword input window 722.

The product display region 730 may display information regarding the plurality of products received from the shopping mall server SV2.
Several detailed information display images (731, 732, 733, 734) may be displayed on the product display region 730. Each of the detailed information display images (731, 732, 733, 734) may include product information therein.

Each of the detailed information display images (731, 732, 733, 734) may include a product image 731a indicating the external appearance of the product, a product name 731b indicating the name of the product, and a product price 731c indicating the price of the product.

Thereafter, the refrigerator 1 may receive a purchase command from the user in operation 1250.

The user may select a desired product on the basis of the product information. For example, the user may touch a desired product to be purchased on the basis of the commodity information displayed on the shopping screen 700. In addition, the user may input a purchase command of the selected product.

Thereafter, the refrigerator 1 may acquire destination information (e.g., destination address) from the user in operation 1260.

The user may input destination information for product reception through the touchscreen display 120. The destination information may include a home address of the user, an office address of the user, and/or the contact information of the user, etc.

When the destination information of the user is stored in the refrigerator 1, the refrigerator 1 may display the destination information of the user on the touchscreen display 120, and the user may confirm or modify the destination information.

Thereafter, the refrigerator 1 may acquire payment information from the user in operation 1270.

The user may select a payment method for paying the price of the product, and may input payment information corresponding to the selected payment information. For example, the user may select a credit card as a payment method, and may input credit card information through the touchscreen display 120.

When the user's payment information is stored in the refrigerator 1, the refrigerator 1 may display the user's payment information on the touchscreen display 120, and the user may confirm or modify the payment information.

Thereafter, the refrigerator 1 may transmit the order of product to the shopping mall server SV2 in operation 1280.

When the product selection information, the destination information, and/or the payment information are completely input, the user may input a product order command through the touchscreen display 120.

The refrigerator 1 having received the product order command may transmit the order request of the user-selected product to the shopping mall server SV2.

As described above, the user may select a desired product through the shopping screen 700 displayed on the touchscreen display 120, may input the destination information and the payment information, and may place the product order.

In addition, the refrigerator 1 may provide an immediate purchase menu for allowing the user to easily purchase the product, and may also provide an automatic purchase menu for automatically purchasing consumables of the refrigerator 1. The immediate purchase of the product will hereinafter be given.

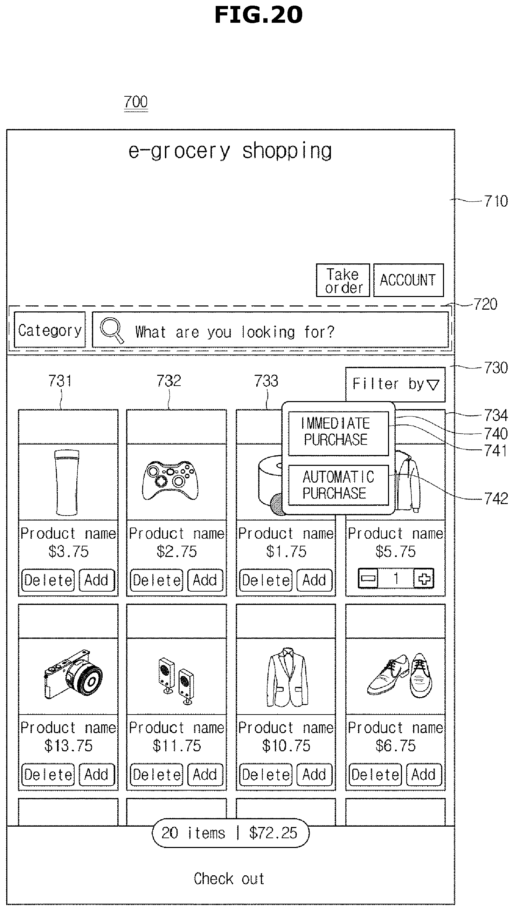

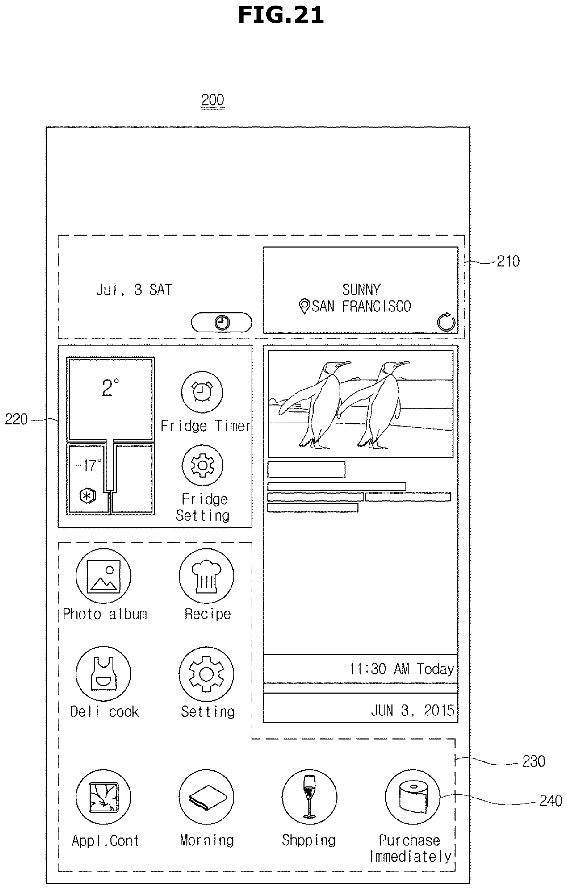

FIG. 20 is an exemplary view illustrating the shopping screen for providing an immediate purchase icon through the refrigerator according to an embodiment of the present disclosure. FIG. 21 is an exemplary view illustrating the immediate purchase icon displayed on the home screen of the refrigerator according to an embodiment of the present disclosure.

If the user selects the product through the shopping screen 700, the refrigerator 1 may display the purchase setting menu 740 for the selected product.

For example, when the user touches the third detailed display region 733 displayed on the shopping screen 700 for a long time as shown in FIG. 20, the refrigerator 1 may display the shopping screen 700 and the purchase setting menu 740 on the touchscreen display 120.

The Immediate Purchase menu 740 may include an immediate purchase button 741 for generating an immediate purchase icon, and an automatic purchase button 742.

When the user touches the immediate purchase button 741, the user-selected product may be determined to be the product for immediate purchase.

Thereafter, the refrigerator 1 may display the screen for receiving the destination information of the user and the payment information from the user on the touchscreen display 120. The user may input the destination information and the payment information through the touchscreen display 120.

When the user inputs the destination information and the payment information, the refrigerator 1 may generate the immediate purchase information for immediate purchase of the selected product as shown in FIG. 21, and the immediate purchase icon 240 may be displayed on the home screen 200. The immediate purchase information may include product information to be purchased, destination information, and/or payment information.

In addition, when the user touches the automatic purchase button 742, the user-selected product may be determined to be the product for automatic purchase.

Thereafter, the refrigerator 1 may allow the user to select consumables corresponding to the automatic purchase product. For example, the refrigerator 1 may display the list of consumables capable of being automatically purchased, and may select consumables corresponding to the automatic purchase product. In addition, the refrigerator 1 may also determine consumables corresponding to the automatic purchase products on the basis of the names of products.

Thereafter, the refrigerator 1 may display the screen through which the user inputs the destination information and the payment information on the touchscreen display 120. The user may input destination information and payment information through the touchscreen display 120.

When the user inputs the destination information and the payment information, the refrigerator 1 may calculate the lifespan of consumables corresponding to the automatic purchase product, and may determine whether to purchase the consumables.

The immediate purchase method and the automatic purchase method will hereinafter be described.

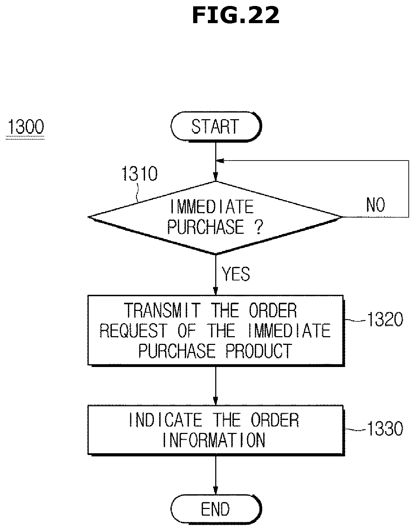

FIG. 22 is a flowchart illustrating an immediate purchase method of the refrigerator according to an embodiment of the present disclosure. The immediate purchase method 1300 of the refrigerator 1 will hereinafter be described with reference to FIG. 22.

The refrigerator 1 may determine whether the user touches the immediate purchase icon 240 (see FIG. 21) displayed on the home screen in operation 1310.

In order to purchase the product to be immediately purchased, the user may touch the immediate purchase icon 240 (see FIG. 21) displayed on the home screen 200 (see FIG. 21) of the touchscreen display 120.

When the user touches the immediate purchase icon 240 (see FIG. 21) in operation 1310, the refrigerator 1 may transmit the order request of the immediate purchase product in operation 1320.

Specifically, the refrigerator 1 may transmit the order request and the immediate purchase information to the shopping mall server SV2. The immediate purchase information may include information of the product to be purchased, destination information and/or payment information. In other words, the refrigerator 1 may transmit product information related to the user-input immediate purchase product, destination information, and/or payment information to the shopping mall server SV2.

Thereafter, the refrigerator 1 may display order information of the immediate purchase product in operation 1330.

Specifically, the refrigerator 1 may display the order information (including the product image of the immediate purchase product, the product name, the number of purchased products) on the home screen 200 of the touchscreen display 120.

In addition, the refrigerator 1 may receive destination information for the immediate purchase product from the shopping mall server SV2, and may display the destination information on the home screen 200 of the touchscreen display 120.

As described above, the refrigerator 1 may immediately order the immediate purchase product on the basis of the pre-stored immediate purchase information without receiving a variety of information (e.g., product selection information, destination information, and/or payment information) of the immediate purchase product from the user.

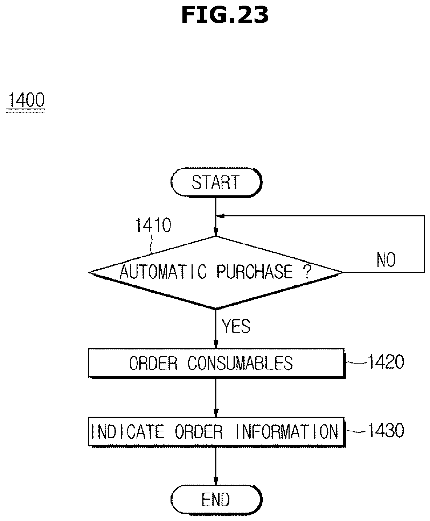

FIG. 23 is a flowchart illustrating an automatic purchase method of the refrigerator according to an embodiment of the present disclosure. The automatic purchase method 1400 of the refrigerator 1 will hereinafter be described with reference to FIG. 23.

Referring to FIG .13, the refrigerator 1 may determine whether the automatic purchase product is purchased or not in operation 1410.

The refrigerator 1 may monitor the lifespan of consumables at intervals of a predetermined time. For example, the refrigerator 1 may monitor the lifespan of the filter 154 contained in the dispenser 150. Specifically, the refrigerator 1 may count how much time has elapsed since the filter 154 was replaced. When the time elapsed since replacement of the filter 154 exceeds a first reference time, the refrigerator 1 may determine whether to automatically purchase the filter 154. In addition, the refrigerator 1 may count the water discharge time from the dispenser 150. When the water discharge time from the dispenser 150 exceeds a second reference time, the refrigerator 1 may determine whether to automatically purchase the filter 154. In addition, the refrigerator 1 may calculate the amount of water discharged from the dispenser 150. When the amount of water discharged from the dispenser 150 exceeds a predetermined reference amount, the refrigerator 1 may determine whether to automatically purchase the filter 154.

When the operation of purchasing the automatic purchase product is determined in operation 1410, the refrigerator 1 may transmit the order request for the product to be automatically purchased to the shopping mall server SV2 in operation 1420.

Specifically, the refrigerator 1 may transmit the automatic purchase information and the order request to the shopping mall server SV2. The automatic purchase information may include information of the product to be purchased, destination information, and/or payment information. Specifically, the refrigerator 1 may transmit the product information of the user-input automatic purchase product, the destination information, and/or the payment information to the shopping mall server SV2.

Thereafter, the refrigerator 1 may display order information for the automatic purchase product in operation 1430.

Specifically, the refrigerator 1 may display the order information (including the product image of the automatic purchase product, the product name, the number of products to be purchased, etc.) on the home screen 200 of the touchscreen display 120.

In addition, the refrigerator 1 may receive delivery information for the automatic purchase product, and may display the delivery information on the home screen 200 of the touchscreen display 120.

As described above, the refrigerator 1 may determine whether to automatically purchase the automatic purchase product (e.g., consumables), and may order the automatic purchase product on the basis of the pre-stored automatic purchase information without receiving the product selection information of the automatic purchase product, the destination information, and/or the payment information from the user.

A method for allowing the refrigerator 1 to manage schedules of the plurality of users will hereinafter be described.

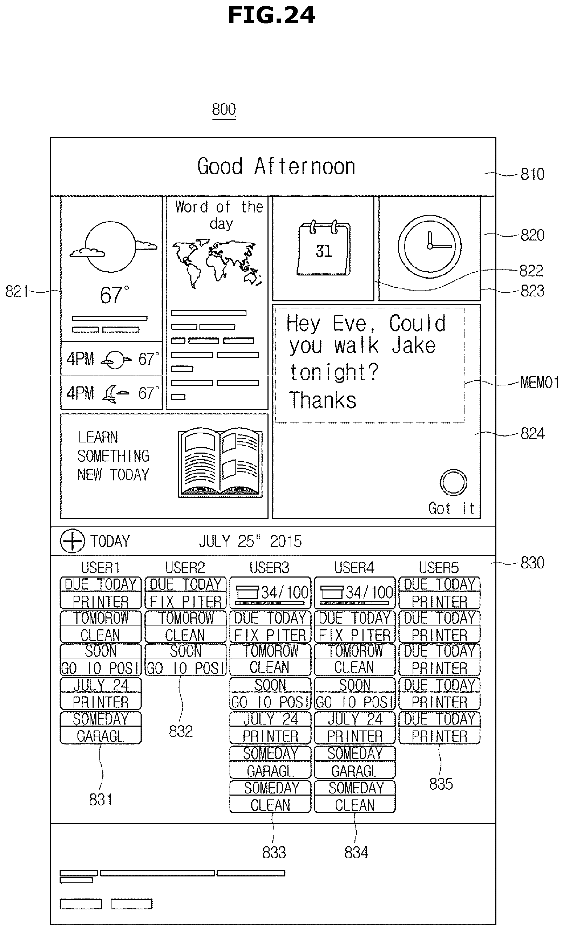

FIG. 24 is an exemplary view illustrating the schedule management screen displayed on the refrigerator according to an embodiment of the present disclosure.

As described above, the plurality of electronic appliances 1 to 9 including the refrigerator 1 may be registered in the user account information registered in the service server SVi, and the refrigerator 1 may control the electronic appliances 1 to 9 registered in the service server SV1.

In addition, the user account information registered in the service server SV1 may interact with the other user accounts. For example, when the user account of the first user (USER1) and the user account of the second user (USER2) are registered in the service server SVi, the first user (USER1) may register the second user (USER2) as friend and/or family in the service server SV1.

In addition, when the second user (USER2) is registered as the friend and/or family of the first user (USER1), the user account of the first user (USER1) may interact with the user account of the second user (USER2). For example, the first user (USER1) of the refrigerator 1 may receive a schedule and/or memorandum entered by the second user (USER2) through the mobile terminal MT.

The refrigerator 1 may display not only the schedule of the first user (USER1) but also the schedule of the second user (USER2) through the touchscreen display 120 so that the first user (USER1) can recognize the displayed schedules.

For example, the refrigerator 1 may display the schedule management screen 800 shown in FIG. 24 on the touchscreen display 120.

The schedule management screen 800 may include a message region 810, a card display region 820, and a schedule display region 830.

The message region 810 may display the changed schedule of another user or the memorandum written by another user. In order words, the message region 810 may provide the user with a notification service.

A plurality of cards (821, 822, 823, 824) including a variety of information may be displayed on the card display region 820. For example, the weather card 821 for displaying weather information, the calendar card 822 for displaying date information, the time card 823 for displaying the time information, the memo card 824 for displaying memorandum, etc. may be displayed. The first memo (MEMO1) entered by the user may be displayed on the memo card 824.

In addition, the user may edit the plurality of cards (821, 822, 823, 824) according to user interest. Specifically, not only the first user (USER1) registered as a user in the service server SVi, but also the other users (USER2, USER3, USER4, USER5) registered as friends and/or families may also edit the plurality of cards (821, 822, 823, 824).

The schedule of the user may be displayed on the schedule display region 830. The schedule display region 830 may display not only the schedule of the first user (USER1) registered as the user in the service server SVi, but also schedules of the other users (USER2, USER3, USER4, USER5) registered as friends and/or families in the service server SV1.

For example, the schedule display region 830 may include a first schedule region 831 for displaying first schedule information of the first user (USER1), a second schedule region 832 for displaying second schedule information of the second user (USER2), a third schedule region 833 for displaying third schedule information of the third user (USER3), a fourth schedule region 834 for displaying fourth schedule information of the fourth user (USER4), and a fifth schedule region 835 for displaying fifth schedule information of the fifth user (USER5).

As described above, the refrigerator 1 may display the schedules of the plurality of users and the memo messages of the plurality of users through the schedule management screen 800.

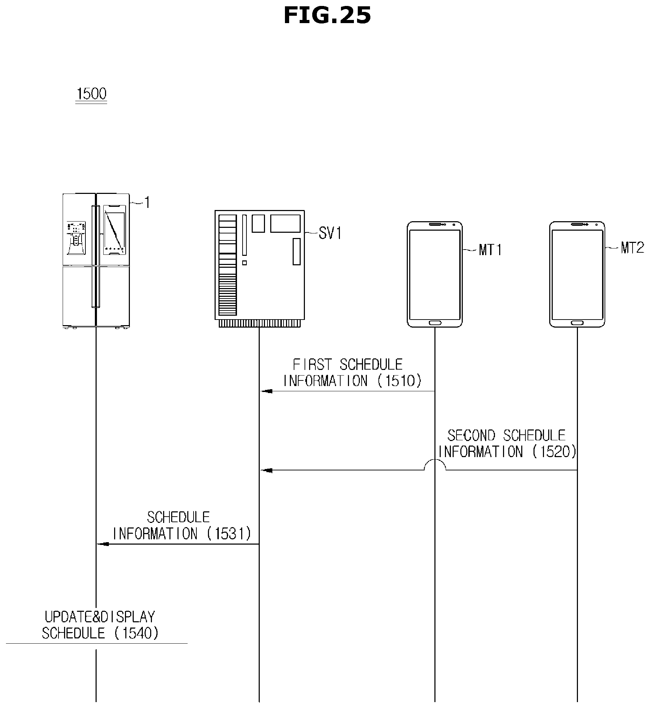

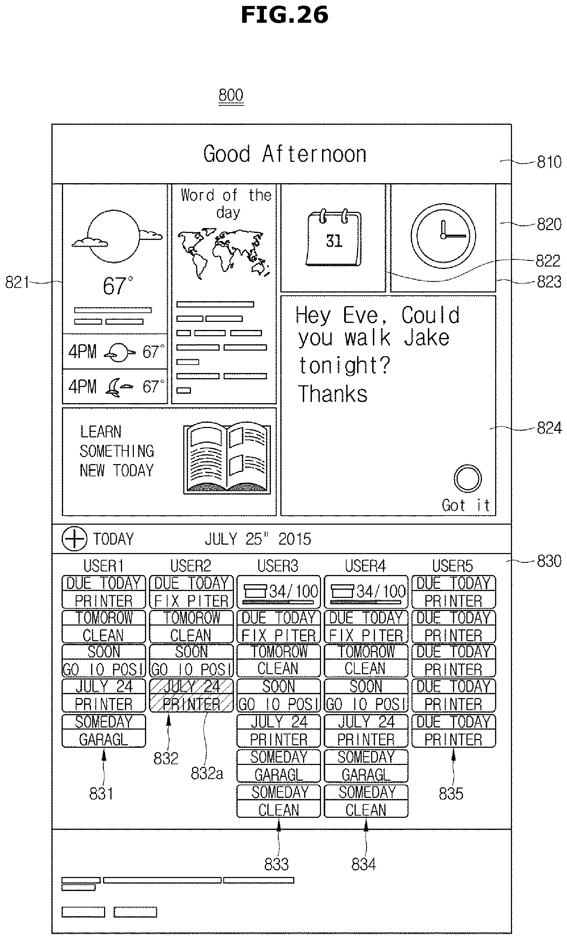

FIG. 25 is a flowchart illustrating a schedule management method of the refrigerator according to an embodiment of the present disclosure. FIG. 26 is a conceptual diagram illustrating a method for updating the schedule management screen displayed on the refrigerator according to an embodiment of the present disclosure.

The schedule management method 1500 of the refrigerator 1 will hereinafter be described with reference to FIGS. 25 and 26.

The first mobile terminal MT1 of the first user (USER1) may transmit first schedule information to the service server SV1 in operation 1510.

Prior to transmission of the first schedule information, the first mobile terminal MT1 may log in to the service server SVi, and may receive first schedule information from the first user (USER1). For example, the first user (USER1) may input the first schedule information using the schedule management screen displayed on the touchscreen display of the first mobile terminal MT1.

The second mobile terminal MT1 of the second user (USER2) may transmit second schedule information to the service server SV1 in operation 1520.

Prior to transmission of the second schedule information, the second mobile terminal MT2 may log in to the service server SVi, and may receive the second schedule information from the second user (USER2). For example, the second user (USER2) may input the second schedule information using the schedule management screen displayed on the touchscreen display of the second mobile terminal MT2.

The service server SV1 may transmit the first and second schedule information to the refrigerator 1 in operation 1530.

Prior to reception of the first and second schedule information, the refrigerator 1 may log in to the service server SV1. For example, the refrigerator 1 may transmit the login information entered through the first and second login screens 310 and 320 (see FIGS. 8 and 9) to the service server SV1.

The service server SV1 may simultaneously transmit the first and second schedule information to the refrigerator 1, or may transmit the first and second schedule information at different times. For example, upon receiving the schedule information from the refrigerator 1, the service server SV1 may simultaneously transmit the first and second schedule information. In another example, upon receiving the first and/or second schedule information from each of the first and second mobile terminals (M1, MT2), the service server SV1 may transmit the first and/or second schedule information to the refrigerator 1 whenever the first and/or second schedule information is received.

The refrigerator 1 may display the received schedule information in operation 1540.
Specifically, the refrigerator 1 may update schedule information on the basis of the received schedule information, and may display the updated schedule information on the schedule management screen 800.

For example, when the second user (USER2) adds the schedule, the refrigerator 1 may add the schedule of the second user (USER2), and may further display the added schedule information 832a on the second schedule region 832 of the schedule management screen 800, as shown in FIG. 26.

As described above, the refrigerator 1 may display not only the schedule of the user, but also schedule information of a third party registered as friend and/or family of the user.

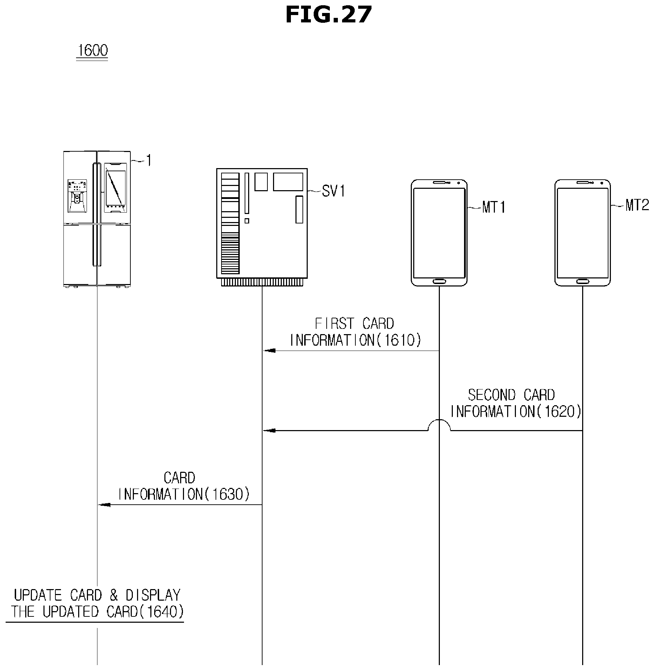

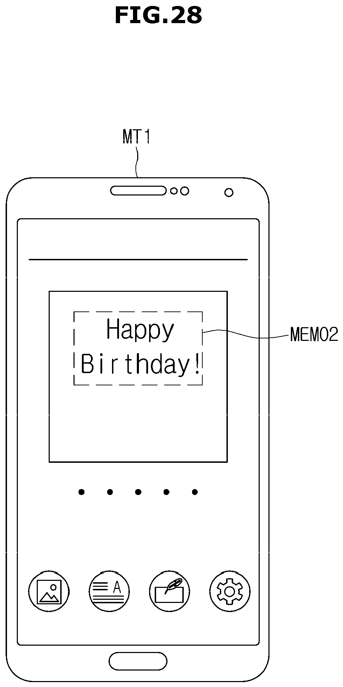

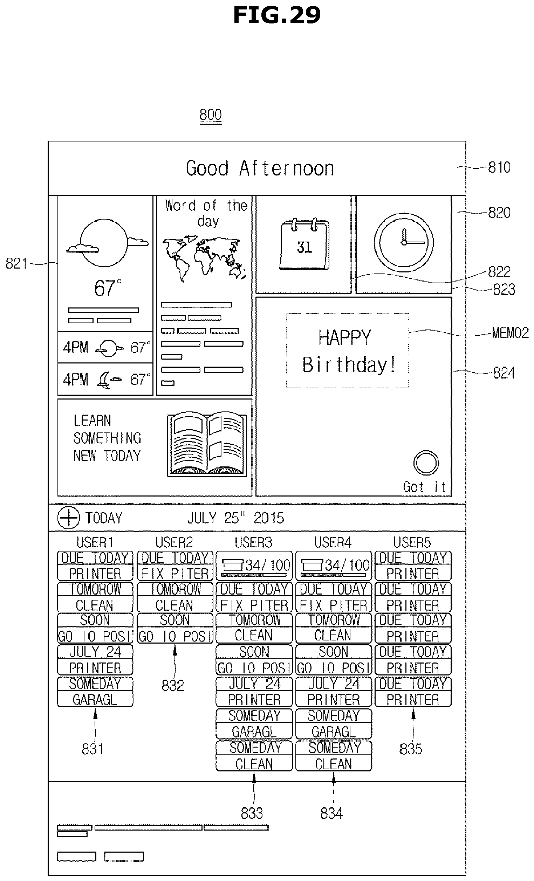

FIG. 27 is a flowchart illustrating a card management method of the refrigerator according to an embodiment of the present disclosure. FIG. 28 is a conceptual diagram illustrating a method for changing a card through a mobile terminal. FIG. 29 is a conceptual diagram illustrating a method for updating the schedule management screen displayed on the refrigerator according to an embodiment of the present disclosure. The card management method 1600 of the refrigerator 1 will hereinafter be described with reference to FIGS. 27, 28, and 29.

The first mobile terminal MT1 of the first user (USER1) may transmit first card information to the service server SV1 in operation 1610.

Prior to transmission of the first card information, the first mobile terminal MT1 may log in to the service server SV1, and may receive the first card information from the first user (USER1).

For example, the first user may change the memorandum displayed on the memo card 824 to the second memo (MEMO2) using the schedule management screen displayed on the touchscreen display of the first mobile terminal MT1 as shown in FIG. 28.

In addition, the second mobile terminal MT2 of the second user (USER2) may transmit second card information to the service server SV1 in operation 1620. Prior to transmission of the second card information, the second mobile terminal MT2 may log in to the service server SV1, and may receive second card information from the second user (USER2). For example, the second user (USER2) may input the second card information using the schedule management screen displayed on the touchscreen display of the second mobile terminal MT2.

The service server SV1 may transmit the first and second card information to the refrigerator 1 in operation 1630.

Prior to reception of the first and second card information, the refrigerator 1 may log in to the service server SV1. For example, the refrigerator 1 may transmit the user-input login information to the service server SV1 through the first and second login screens 310 and 320 (see FIGS. 8 and 9).

The service server SV1 may simultaneously transmit the first and second card information to the refrigerator 1, or may transmit the first and second card information to the refrigerator 1 at different times. For example, if the refrigerator 1 requests card information, the service server SV1 may simultaneously transmit the first and second card information to the refrigerator 1. In another example, upon receiving the first and/or second card information from each of the first and second mobile terminals MT1 and MT2, the service server SV1 may transmit the first and/or second card information to the refrigerator 1 whenever the first and/or second card information is received.

The refrigerator 1 may display the received card information in operation 1640. Specifically, the refrigerator 1 may update card information on the basis of the received card information, and may display the updated card information on the schedule management screen 800.

For example, when the first user (USER1) changes the memo message displayed on the memo card 824 to the second memo (MEMO2) as shown in FIG. 28, the refrigerator 1 may display a new second memo (MEMO2) on the memory card 824 of the schedule management screen 800 as shown in FIG. 29.

As described above, the schedule management screen 800 of the refrigerator 1 may be edited by the user, and may also be edited by a third party registered as the friend and/or family of the user.

As is apparent from the above description, the refrigerator according to the embodiments of the present disclosure can provide the user with a convenient Internet shopping service using the touchscreen display and the communication module.

The refrigerator according to the embodiments of the present disclosure can control other electronic appliances using the touchscreen display and the communication module.

The refrigerator according to the embodiments of the present disclosure can simultaneously display schedules of multiple users using the touchscreen display and the communication module.

The refrigerator according to the embodiments of the present disclosure can audibly output content information.

Although a few embodiments of the present invention have been shown and described, it would be appreciated by those skilled in the art that changes may be made in these embodiments without departing from the principles of the invention, the scope of which is defined in the claims.

## Claims

1. A refrigerator comprising:
an audio part configured to output a sound signal;
a touchscreen display; and
a controller configured to display information corresponding to user touch input received through the touchscreen display on the touchscreen display,
wherein the controller is configured to audibly output content information decided by a user through the audio part.

2. The refrigerator according to claim 1, wherein the touchscreen display is configured to display a setup screen needed to audibly output the content.

3. The refrigerator according to claim 2, wherein the setup screen includes:
a first region configured to establish activation or deactivation of a function for audibly outputting the content;
a second region configured to establish a trigger condition needed to audibly output the content;
a third region configured to establish at least one of tone and volume of content output sound; and
a fourth region configured to establish the output content.

4. The refrigerator according to claim 3, wherein the trigger condition includes:
a first trigger condition configured to audibly output the content when the user approaches the refrigerator;
a second trigger condition configured to audibly output the content when the user opens one or more doors of the refrigerator; and
a third trigger condition configured to audibly output the content at intervals of a predetermined time.

5. The refrigerator according to claim 3, wherein the second region includes:
a tone selection region configured to select tone of content output sound; and
a volume selection region configured to select volume of the content output sound.

6. The refrigerator according to any one of the preceding claims, wherein the content includes at least one of weather information, news information, and schedule information.
